# EUROPEAN PATENT APPLICATION

(11) **EP 4 841 874 A1**
(43) Date of publication of application: **18.11.2026**
(21) Application number: 26178805.3
(22) Date of filing: 14.05.2026
(51) Int. Cl.: H02M 1/00, H01F 3/10, H02M 1/42, H02M 7/219

(54) **RECTIFIER**

(30) Priority: 14.05.2025 US 202563805360 P
(71) Applicant: Delta Electronics, Inc., Taipei 114501 (TW)
(72) Inventor: Guo, Zhehui, 27560 Morrisville, NC (US); Sharma, Shrivatsal, 27560 Morrisville, NC (US); Wang, Dakai, 27560 Morrisville, NC (US); Phukan, Ripun, 27560 Morrisville, NC (US); Kumar, Misha, 27560 Morrisville, NC (US); Barbosa, Peter Mantovanelli, 320023 Taoyuan City (TW)
(74) Representative: Petraz, Gilberto Luigi

(57) **Abstract**

A rectifier is disclosed. The rectifier includes an input end; an output capacitor (Cₒ); a first high frequency (HF) bridge leg (B1), a second HF bridge leg (B2), and a line frequency (LF) bridge leg (B3) all connected to the output capacitor (Cₒ ) in parallel; a first inductor (L_{g1}) connected between the input end and a middle end of the first HF bridge leg (B 1); a second inductor (L_{g2}) connected between the input end and a middle end of the second HF bridge leg (B2); and a first branch inductor (L_{b}) connected between the middle end of the first HF bridge leg (B1) and the middle end of the second HF bridge leg (B2).

## Description

### FIELD

The disclosure relates generally to power electronics and, more specifically, to a rectifier. In particular, it pertains to a rectifier, featuring enhanced magnetic integration, approaching or achieving zero-voltage switching (ZVS), and scalability to multi-phase systems.

### BACKGROUND

Triangular current mode (TCM) power factor correction (PFC) rectifiers are known for their soft-switching benefits and high efficiency. However, their inductors must handle both low-frequency and high-frequency current components simultaneously, making magnetic design challenging. This mixed-frequency stress often leads to bulky and lossy inductors, limiting improvements in power density and overall efficiency.

To address these challenges, an integrated triangular current mode (iTCM) concept has been proposed. By introducing an auxiliary LC branch, the high-frequency and low-frequency current components are decoupled, enabling independent optimization of two separate inductors for reduced losses and minimized magnetic volume. The iTCM approach has been applied to two-phase interleaved totem-pole PFC rectifiers, where interleaving further reduces current stress on the auxiliary capacitor, enhances power handling capability, mitigates thermal concentration, and suppresses input current ripple.

However, a key drawback of the conventional iTCM topology is that the voltage across the auxiliary capacitor for blocking low frequency bias current flowing through the auxiliary LC branch closely follows the grid voltage, requiring high-voltage-rated film capacitors. These film capacitors are bulky, costly, and limit power density. Ceramic capacitors, though more compact, are generally unsuitable due to voltage derating, large package size, and reliability issues under high voltage bias. Furthermore, the low-frequency voltage across the auxiliary capacitor induces leading capacitive current, causing input current distortion and derating of power quality.

### SUMMARY

An object of the disclosure is to provide a rectifier to solve the issues of prior art.

To achieve the above-mentioned objects, one embodiment of the disclosure provides a rectifier, including: an input end; an output capacitor (Cₒ); a first high frequency (HF) bridge leg (B1), a second HF bridge leg (B2), and a line frequency (LF) bridge leg (B3) all connected to the output capacitor (Cₒ) in parallel; a first inductor (L_{g1}) connected between the input end and a middle end of the first HF bridge leg (B 1); a second inductor (L_{g2}) connected between the input end and a middle end of the second HF bridge leg (B2); and a first branch inductor (L_{b}) connected between the middle end of the first HF bridge leg (B 1) and the middle end of the second HF bridge leg (B2).

Optionally, in one embodiment of the disclosure, gate signals distortions and propagation delay mismatches between the first HF bridge leg and the second HF bridge leg are less than 0.1%.

Optionally, in one embodiment of the disclosure, the rectifier further includes: a current sensor connected to the first branch inductor (L_{b}) in series; a low-pass filter connected to an output of the current sensor; and a control circuit connected to the low-pass filter to output control signal to the first HF bridge leg and the second HF bridge leg. In one embodiment, the control circuit includes a compensating circuit.

Optionally, in one embodiment of the disclosure, the control circuit includes: a compensator and a power factor correction (PFC) modulator, and output of the compensator is summed with output of the PFC modulator to adjust the control signal to the second HF bridge leg.

Optionally, in one embodiment of the disclosure, the control circuit includes: a compensator and a PFC modulator, and output of the compensator is subtracted from output of the PFC modulator to adjust the control signal to the first HF bridge leg.

Optionally, in one embodiment of the disclosure, a variable switching frequency f_{sw}(t) over the line cycle is expressed as: ${f}_{sw} \left(t\right) = \left\{\begin{matrix}\frac{1}{2 \left[\frac{1}{2}{i}_{gpk}\left|sin\left(wt\right)\right|+{I}_{zvs}\right]} \left(\frac{\left(1-d\left(t\right)\right) {V}_{o}}{{L}_{b}}+\frac{d \left(t\right) ⋅ {u}_{gpk} \left|sin\left(wt\right)\right|}{{L}_{g}}\right) , d \left(t\right) > \frac{1}{2} \\ \frac{1}{2 \left[\frac{1}{2}{i}_{gpk}\left|sin\left(wt\right)\right|+{I}_{zvs}\right]} \left(\frac{d \left(t\right) {V}_{o}}{{L}_{b}}+\frac{d \left(t\right) ⋅ {u}_{gpk} \left|sin\left(wt\right)\right|}{{L}_{g}}\right) , d \left(t\right) < \frac{1}{2}\end{matrix}\right.$ wherein L_{g} is inductance of the first inductor or the second inductor, L_{b} is inductance of the first branch inductor, u_{gpk} is a peak ac grid voltage, i_{gpk} is a peak grid current, Vₒ is an output voltage of the PFC rectifier, I_{zvs} is a predefined current level used to approach or achieve zero-voltage switching (ZVS) for main switches, and d(t) is the duty cycle for main switches and is determined by $d \left(t\right) = 1 - \frac{{u}_{gpk} \left|sin\left(wt\right)\right|}{{V}_{o}} .$

Optionally, in one embodiment of the disclosure, the inductance L_{g} and L_{b} are expressed as: $\begin{matrix}{L}_{g} = \frac{{u}_{gpk}^{2}}{{r}_{Lg} {f}_{sw min} P} \left(1-\frac{{u}_{gpk}}{{V}_{o}}\right) and \\ {L}_{b} = \frac{{V}_{o}}{2 {f}_{sw min} \left(\frac{1}{2}{i}_{gpk}+{I}_{zvs}-\frac{{r}_{Lg} P}{2 {u}_{gpk}}\right)} \left(1-\frac{{u}_{gpk}}{{V}_{o}}\right)\end{matrix}$ wherein r_{Lg} is a ripple ratio of inductance current of the first inductor or the second inductor, f_{sw min} is a minimum switching frequency corresponding to a peak position of a grid voltage, and P denotes a total power rating of the converter.

Optionally, in one embodiment of the disclosure, the rectifier further includes a first branch capacitor (C_{b}) connected between the first branch inductor (L_{b}) and the middle end of the second HF bridge leg (B2).

Optionally, in one embodiment of the disclosure, the rectifier further includes: a second branch inductor (L_{b2}) connected between the first branch capacitor (C_{b}) and the middle end of the second HF bridge leg (B2); a first core coupling between the first inductor (L_{g1}) and the first branch inductor (L_{b1}); and a second core coupling between the second inductor (L_{g2}) and the second branch inductor (L_{b2}), wherein a mutual inductance (LM1) of the first inductor (L_{g1}) and the first branch inductor (L_{b1}) is approximately equal to a mutual inductance (LM2) of the second inductor (L_{g2}) and the second branch inductor (L_{b2}); and the mutual inductances LM1 and LM2 may be approximately equal to equivalent inductances of the first branch inductor (Lᵥ₁) and the second branch inductor (L_{b2}), respectively.

Optionally, in one embodiment of the disclosure, the rectifier further includes: a third HF bridge leg (B4) connected to the output capacitor (Cₒ) in parallel; a third inductor (L_{g3}) connected between the input end and a middle end of the third HF bridge leg (B4); a second branch inductor (L_{b23}) and a second branch capacitor (C_{b23}) connected in serial between the middle end of the second HF bridge leg (B2) and the middle end of the third HF bridge leg (B4); and a third branch inductor (L_{b31}) and a third branch capacitor (C_{b31}) connected in serial between the middle end of the third HF bridge leg (B4) and the middle end of the first HF bridge leg (B1).

Optionally, in one embodiment of the disclosure, the rectifier further includes core limbs for the first inductor (L_{g1}), the second inductor (L_{g2}), and the first branch inductor (L_{b}), respectively and arranged in a symmetric triangular layout and a shared limb positioned centrally between the core limbs.

Optionally, in one embodiment of the disclosure, a cross-section of the shared limb is shaped circular or "Y" shaped.

Optionally, in one embodiment of the disclosure, the rectifier further includes core limbs for the first inductor (L_{g1}), the second inductor (L_{g2}), and the first branch inductor (L_{b}), respectively and arranged in a linear layout and two elongation-shaped shared limbs disposed parallel with the linear layout and symmetrically positioned at two long sides of the core limbs, respectively.

Optionally, in one embodiment of the disclosure, the rectifier further includes core limbs for the first inductor (L_{g1}), the second inductor (L_{g2}), and the first branch inductor (L_{b}), respectively and arranged in a linear layout and two shared limbs distributed parallel with the linear layout and symmetrically positioned at two short sides of the core limbs.

Optionally, in one embodiment of the disclosure, the rectifier further includes two further shared limbs disposed between two adjacent core limbs, respectively.

Optionally, in one embodiment of the disclosure, the rectifier further includes core limbs for the first inductor (L_{g1}), the second inductor (L_{g2}), and the first branch inductor (L_{b}), respectively and arranged in a linear layout and two shared limbs positioned between two adjacent core limbs, respectively.

Optionally, in one embodiment of the disclosure, the core limb for the first branch inductor (L_{b}) is disposed between the core limbs for the first inductor (L_{g1}) and the second inductor (L_{g2}).

Optionally, in one embodiment of the disclosure, the core limbs are disposed side by side, and axes of the core limbs are disposed parallel to each other.

Optionally, in one embodiment of the disclosure, windings of the first inductor and the first branch inductor have a same winding direction and have an inversed winding direction with winding of the second inductor.

Optionally, in one embodiment of the disclosure, the first HF bridge leg (B1) and the second HF bridge leg (B2) are 180º in phase, the first HF bridge leg (B1) includes a first switch (S₁) and a second switch (S₂) connected in serial and operated in complementary manner, and the second HF bridge leg (B2) includes a third switch (S₃) and a fourth switch (S₄) connected in serial and operated in complementary manner.

Optionally, in one embodiment of the disclosure, the LF bridge leg (B3) includes two switches (M₁/M₃) connected in serial and operated in complementary manner.

Optionally, in one embodiment of the disclosure, the rectifier includes a two-phase interleaved totem-pole power factor correction (PFC) rectifier. In some embodiments, the two-phase interleaved totem-pole PFC rectifier may be configured as a film-capacitor-less integrated triangular current mode (iTCM) rectifier.

Compared to prior art, the embodiments of the disclosure may eliminate the need for film capacitors by modifying the LC branch configuration, enabling the use of compact low-voltage-rated ceramic capacitors. In addition, it introduces magnetic integration strategies based on zero-flux features by specific winding configurations, reducing magnetic volume while preserving performance. A DC bias compensation control strategy is also developed to eliminate the need for the physical auxiliary capacitor entirely, further simplifying the power stage and reducing cost. The proposed topology supports two-phase and three-phase interleaved PFC implementations and further enables coupled inductor variants that reduce current ripple and optimize magnetic design.

The present disclosure is better understood upon consideration of the following detailed description and accompanying figures.

### BRIEF DESCRIPTION OF DRAWINGS

FIG. 1(a) illustrates the schematic diagram of a two-phase interleaved iTCM totem-pole PFC rectifier topology.
FIG. 1(b) shows the simulated waveforms of the topology of FIG. 1(a) to demonstrate the voltage behavior across the capacitor.
FIG. 1(c) illustrates the schematic of the proposed rectifier according to an embodiment of the disclosure.
FIG. 2 illustrates the schematic of the proposed rectifier according to another embodiment of the disclosure.
FIG. 3 shows simulation waveforms demonstrating the voltage behavior across the branch capacitor in the proposed rectifier topology of FIG. 2.
FIGS. 4(a) to 4(d) illustrates the switching patterns and key current waveforms under different operating conditions of the proposed rectifier topologies of FIG. 1(c) and FIG. 2.
FIGS. 5(a) to 5(c) present simulation waveforms of inductor currents over the entire line cycle along with zoomed-in views for duty cycles greater than ½ and less than ½. These results validate proper current shaping throughout the operating range.
FIGS. 6(a) to 6(b) show the inductor current waveforms during the positive half-line cycle, used to derive the magnetic zero-flux condition under duty cycles less than ½ and greater than ½.
FIGS. 7(a) to 7(d) illustrate a magnetic integration structure according to an embodiment of the disclosure.
FIGS. 8(a) to 8(c) illustrate another magnetic integration structure according to an embodiment of the disclosure.
FIGS. 9(a) to 9(c) illustrate another magnetic integration structure according to an embodiment of the disclosure.
FIGS. 10(a) to 10(c) illustrate a modified magnetic integration structure according to another embodiment of the disclosure.
FIGS. 11(a) to 11(c) illustrate another magnetic integration structure according to an embodiment of the disclosure.
FIGS. 12(a) to 12(b) illustrate proposed rectifiers according to another embodiments of the disclosure.
FIG. 13 illustrates an extension of another proposed rectifier according to an embodiment of the disclosure.
FIGS. 14(a) to 14(c) show the switching patterns for the proposed rectifier topology in FIG. 13 under various duty cycle conditions.
FIGS. 15(a) to 15(d) present example simulation waveforms for the proposed rectifier topology in FIG. 13 approximately validating ZVS operation and current behavior across a line cycle.
FIG. 16 illustrates another proposed rectifier according to an embodiment of the disclosure.
FIGS. 17(a) to 17(b) show the switching pattern of the proposed rectifier topology in FIG. 16 during the positive half-line cycle.
FIG. 18(a) depicts a simplified decoupling circuit schematic for the proposed rectifier topology in FIG. 16.
FIG. 18(b) depicts an equivalent circuit schematic to demonstrate identical current distribution enabled by the proposed coupled-inductor-based configuration in FIG. 16.
FIGS. 19(a) to 19(c) present simulation waveforms for the rectifier with coupled inductors of the embodiment shown in FIG. 16.

### DETAILED DESCRIPTION

In order to make the above and other objects, features, and advantages of the disclosure easier to understand, preferred embodiments of the disclosure will be illustrated below and described in detail with reference to the drawings. In addition, in the drawings, structurally similar units are represented by the same reference numerals.

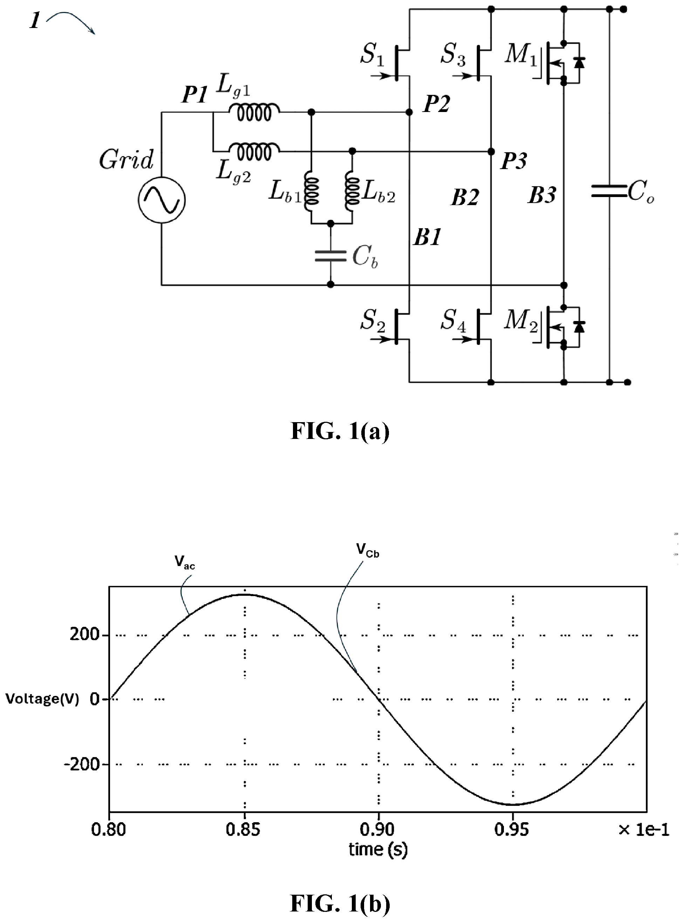

Referring to FIG. 1(a), FIG. 1(a) illustrates a schematic diagram of a two-phase interleaved integrated triangular current mode (iTCM) totem-pole power factor correction (PFC) rectifier 1. In this topology, a first switch S₁ to a fourth switch S₄ operate at the high frequency (HF) with a 180° phase shift between the first switch S₁ and the third switch S₃ and between the second switch S₂ and the fourth switch S₄, while a first low-frequency (LF) switch M₁ and a second LF switch M₂ operate at the line frequency. Besides PFC main inductors, a first inductor L_{g1} and a second inductor L_{g2}, two additional inductors, a first branch inductor L_{b1} and a second branch inductor L_{b2}, are introduced between a midpoint P2 of a first HF bridge leg B1 and a midpoint P3 of a second HF bridge leg B2 and a first branch capacitor C_{b}, which is referenced to the AC neutral line. The added branch network (the first branch inductor L_{b1}, the second branch inductor L_{b2}, and the first branch capacitor C_{b}) decouples the HF and LF current components, enabling separate optimization of the first inductor L_{g1} and the first branch inductor L_{b1}, and the second inductor L_{g2} and the second branch inductor L_{b2}, using different types of magnetic core materials to improve the converter efficiency.

Referring to FIG. 1(b), FIG. 1(b) shows the example simulated waveforms of the topology of FIG. 1(a) to demonstrate the voltage behavior across the first branch capacitor C_{b}. in detail, a major drawback of this iTCM topology is that the voltage across the first branch capacitor C_{b} closely follows the grid voltage, V_{ac}, as demonstrated by the simulation waveforms in FIG. 1(b). Consequently, high-voltage-rated capacitors are used to implement the first branch capacitor C_{b}. In such applications, film capacitors are typically used instead of ceramic capacitors, which are relatively bulky and thus increases the component volume. Although ceramic capacitors provide higher energy density and more compact size, they are generally unsuitable for this application. The ceramic capacitors require large packages (e.g., package no. 1812, 2220 or larger) for high voltage rating applications, which are prone to cracking under mechanical or thermal stress, potentially causing short circuits and compromising system reliability. Furthermore, ceramic capacitors suffer from significant capacitance derating under high voltage bias, necessitating the use of multiple units in parallel to maintain the minimum effective capacitance. This further increases the failure risk and reduces system reliability. In contrast, film capacitors offer greater reliability and tend to fail in an open-circuit mode, thereby avoiding catastrophic failure modes. However, they are bulky and possess limited current ratings, requiring multiple units to be parallel to meet current demands, which increases the physical volume of the first branch capacitor C_{b}.

Additionally, since the LF voltage across the first branch capacitor C_{b} tracks the grid voltage V_{ac}, it generates capacitive current that leads the grid voltage, resulting in input current distortion. This necessitates further current control compensation to maintain good power quality.

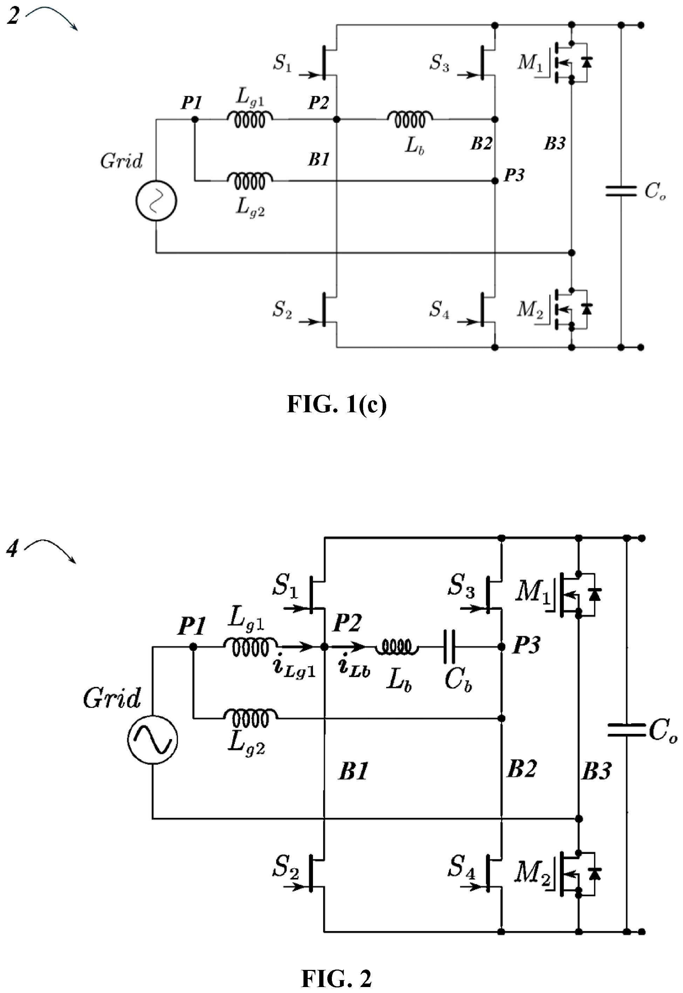

Referring to FIG. 1(c), FIG. 1(c) illustrates the schematic of the proposed rectifier according to an embodiment of the disclosure. One embodiment of the disclosure provides a rectifier 2, including: an input end P1; an output capacitor Cₒ; a first high frequency (HF) bridge leg B1, a second HF bridge leg B2, and a line frequency (LF) bridge leg B3 all connected to the output capacitor Cₒ in parallel; a first inductor L_{g1} connected between the input end P1 and a middle end P2 of the first HF bridge leg B1; a second inductor L_{g2} connected between the input end P1 and a middle end P3 of the second HF bridge leg B2; and a first branch inductor L_{b} connected between the middle end P2 of the first HF bridge leg B1 and the middle end P3 of the second HF bridge leg B2.

Optionally, in one embodiment of the disclosure, the first HF bridge leg B1 and the second HF bridge leg B2 are 180º in phase, the first HF bridge leg B1 includes a first switch S₁ and a second switch S₂ connected in serial and operated in complementary manner, and the second HF bridge leg B2 includes a third switch S₃ and a fourth switch S₄ connected in serial and operated in complementary manner.

Optionally, in one embodiment of the disclosure, the LF bridge leg B3 includes first LF switch M₁ and a second LF switch M₂ connected in serial and operated in complementary manner.

Optionally, in one embodiment, the rectifier 2 includes a two-phase interleaved totem-pole power factor correction (PFC) rectifier. In some embodiments, the two-phase interleaved totem-pole PFC rectifier may be configured as a film-capacitor-less integrated triangular current mode (iTCM) rectifier.

Optionally, in one embodiment of the disclosure, gate signals distortions and propagation delay mismatches between the first HF bridge leg B1 and the second HF bridge leg B2 are less than 0.1%. in detail, in cases where the gate signal distortions and propagation delay mismatches are minimal (typically less than 0.1%), it can prevent the first branch inductor L_{b} from saturating for the proposed film-capacitor-less iTCM PFC topology. This is due to the inherent self-balancing capability of the proposed film-capacitor-less iTCM PFC topology. In detail, in a practical implementation, gate signal distortions and propagation delay mismatches among first switch S₁ to the fourth switch S₄ can result in a nonzero averaged voltage across the first branch inductor L_{b}, so there need something, such as a first branch capacitor C_{b} serving as a DC blocking capacitor, an appropriate compensation, or control strategies that prevents DC current from flowing through the first branch inductor L_{b} to cause saturation in the first branch inductor L_{b}.

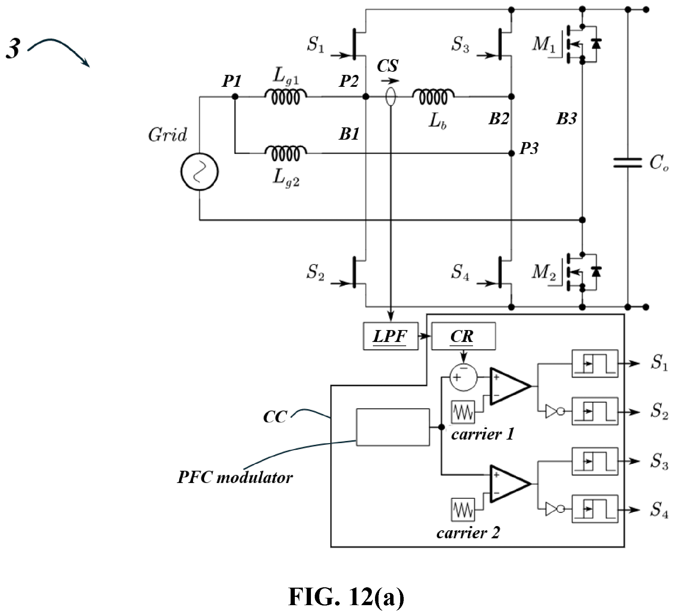

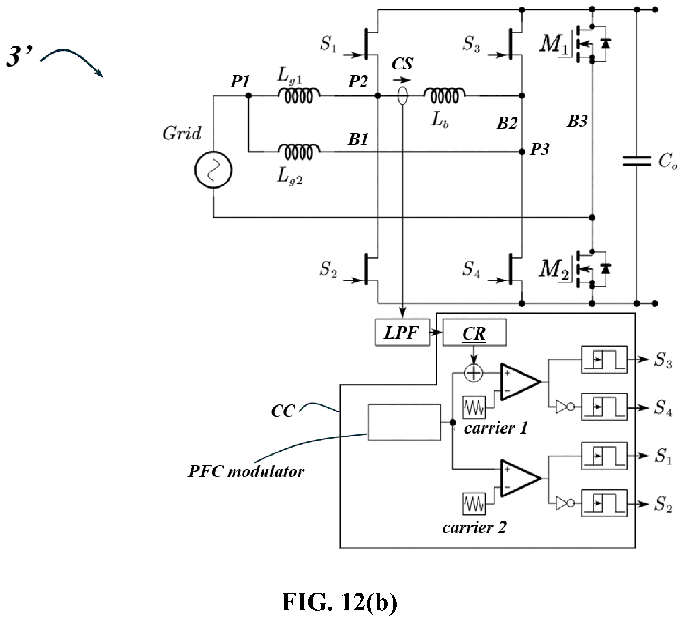

Referring to FIG. 12(a) and FIG. 12(b), Optionally, in one embodiment of the disclosure, the rectifier 3 further includes: a current sensor CS connected to the first branch inductor L_{b} in series; a low-pass filter LPF connected to an output of the current sensor CS; and a control circuit CC connected to the low-pass filter LPF to output control signal to the first HF bridge leg B1 and the second HF bridge leg B2.

Referring to FIG. 12(a), optionally, in one embodiment of the disclosure, the control circuit CC includes: a compensator CR and a PFC modulator, and output of the compensator CR is subtracted from output of the PFC modulator to adjust the control signal to the first HF bridge leg B1 (including the first switch S₁ and the second switch S₂).

Referring to FIG. 12(b), optionally, in one embodiment of the disclosure, the control circuit CC includes: a compensator CR and a PFC modulator, and output of the compensator CR is summed with output of the PFC modulator to adjust the control signal to the second HF bridge leg B2 (including the third switch S₃ and the fourth switch S₄).

In detail, referring to FIGS. 12(a) to 12(b), FIGS. 12(a) to 12(b) illustrate the proposed compensation control strategy to prevent from the first branch inductor L_{b} saturation for the proposed film-capacitor-less iTCM PFC topology. As previously mentioned, the voltage across the first branch inductor L_{b} depends on the difference between the average voltages of the midpoint P2 of the first HF bridge leg B1 and the midpoint P3 of the second HF bridge leg B2. In a practical implementation, gate signal distortions and propagation delay mismatches among the first switch S₁ to the fourth switch S₄ can result in a nonzero averaged voltage across the first branch inductor L_{b}, so there needs something that prevents DC current from flowing through first branch inductor L_{b}. With appropriate compensation or control strategies, such as that shown in FIG. 12(a) and FIG. 12(b), saturation in first branch inductor L_{b} can be eliminated. In these implementations, a current sensor is placed in series with the first branch inductor L_{b} to monitor the DC current flowing through first branch inductor L_{b}. Suitable current sensing methods include a shunt resistor combined with an isolated differentiator or a Hall-effect current sensor. The output of the current sensor is passed through a low-pass filter LPF and fed into a compensator CR, which can be a proportional-integral (PI) controller or another control type. The compensator CR output is then summed with (as shown in FIG. 12(b)) or subtracted from (as shown in FIG. 12(a)) the output of the PFC modulator, or both, to adjust the gate signals of the first switch S₁ to the fourth switch S4 accordingly.

Optionally, in one embodiment of the disclosure, a variable switching frequency f_{sw}(t) over the line cycle is expressed as: ${f}_{sw} \left(t\right) = \left\{\begin{matrix}\frac{1}{2 \left[\frac{1}{2}{i}_{gpk}\left|sin\left(wt\right)\right|+{I}_{zvs}\right]} \left(\frac{\left(1-d\left(t\right)\right) {V}_{o}}{{L}_{b}}+\frac{d \left(t\right) ⋅ {u}_{gpk} \left|sin\left(wt\right)\right|}{{L}_{g}}\right) , d \left(t\right) > \frac{1}{2} \\ \frac{1}{2 \left[\frac{1}{2}{i}_{gpk}\left|sin\left(wt\right)\right|+{I}_{zvs}\right]} \left(\frac{d \left(t\right) {V}_{o}}{{L}_{b}}+\frac{d \left(t\right) ⋅ {u}_{gpk} \left|sin\left(wt\right)\right|}{{L}_{g}}\right) , d \left(t\right) < \frac{1}{2}\end{matrix}\right.$ (1) wherein L_{g} is inductance of the first inductor or the second inductor, L_{b} is inductance of the first branch inductor, u_{gpk} is a peak AC grid voltage, i_{gpk} is a peak grid current, Vₒ is an output voltage of the PFC rectifier, ω is the angular frequency, t is the time, I_{zvs} is a predefined current level used to approach or achieve zero-voltage switching (ZVS) for main switches, and d(t) is duty cycle determined by $d \left(t\right) = 1 - \frac{{u}_{gpk} \left|sin\left(wt\right)\right|}{{V}_{o}}$ (2)

Optionally, in one embodiment of the disclosure, the inductance L_{g} and L_{b} are expressed as: ${L}_{g} = \frac{{u}_{gpk}^{2}}{{r}_{Lg} {f}_{sw min} P} \left(1-\frac{{u}_{gpk}}{{V}_{o}}\right)$ (3) and ${L}_{b} = \frac{{V}_{o}}{2 {f}_{sw min} \left(\frac{1}{2}{i}_{gpk}+{I}_{zvs}-\frac{{r}_{Lg} P}{2 {u}_{gpk}}\right)} \left(1-\frac{{u}_{gpk}}{{V}_{o}}\right)$ (4) where u_{gpk} is the peak ac grid voltage, i_{gpk} is the peak grid current, Vₒ is the output voltage of the rectifier, and r_{Lg} is the ripple ratio of inductance current of L_{g}, typically set less than 40%. f_{sw min} is the minimum switching frequency corresponding to the peak position of the grid voltage. P denotes the total power rating of PFC converter, and I_{zvs} is the predefined current level used to approach or achieve ZVS for main switches.

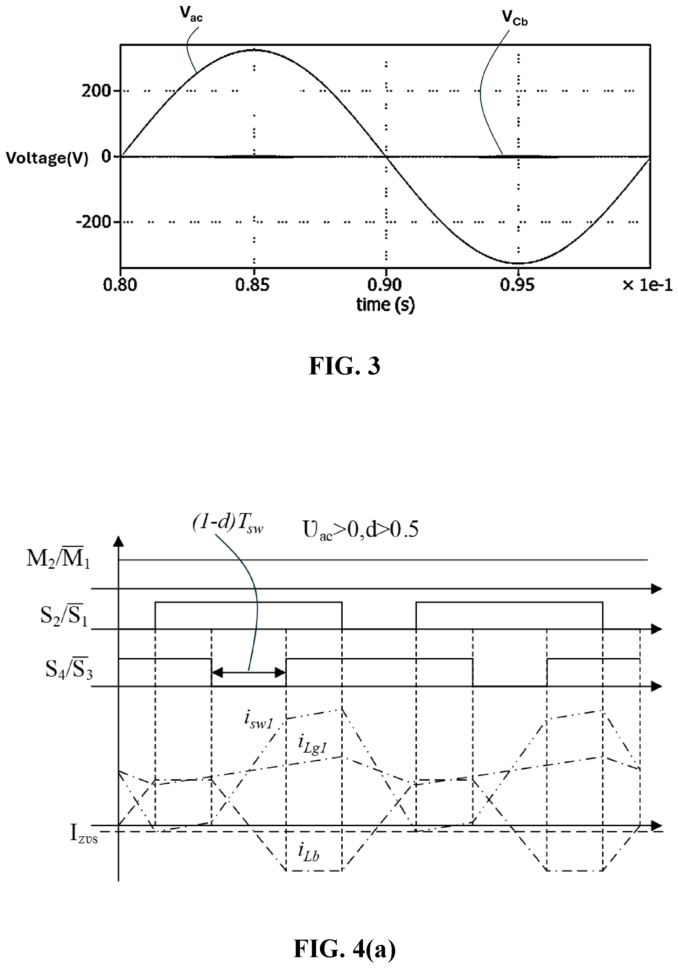

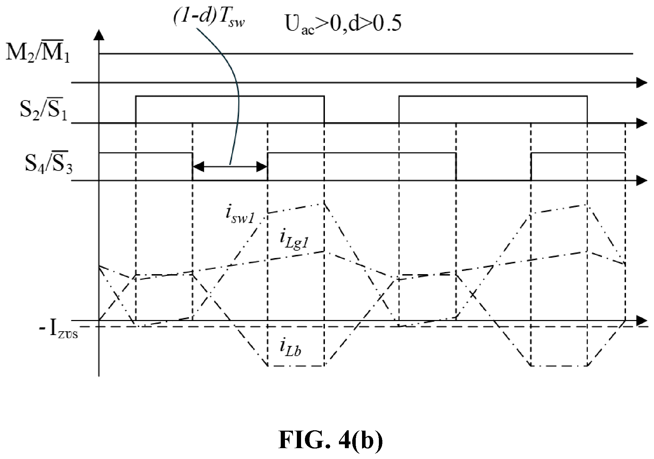

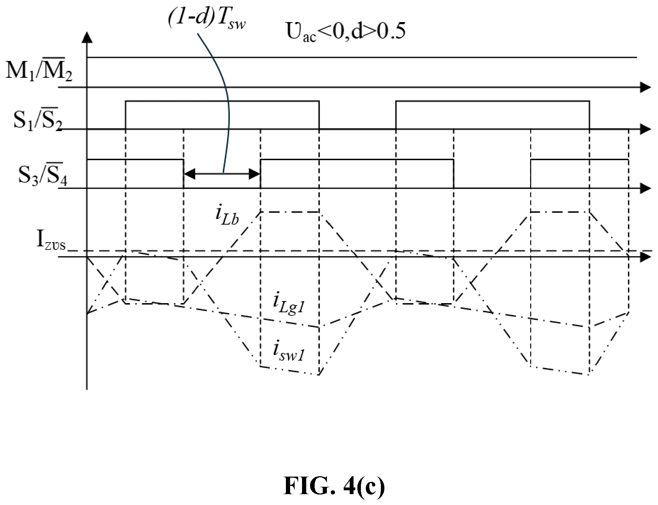

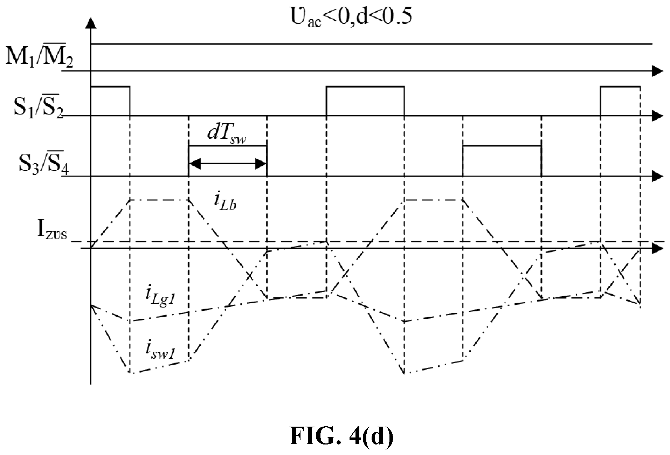

Referring to FIGS. 4(a) to 4(d), FIGS. 4(a) to 4(d) illustrate the switching patterns of proposed rectifier under various operating conditions, including: V_{ac} > 0, d > 0.5; V_{ac} > 0, d < 0.5; V_{ac} < 0, d > 0.5; and V_{ac} < 0, d < 0.5. Using waveforms of the current i_{Lg1} and i_{Lb} of the first inductors L_{g1} and the first branch inductor L_{b}, as examples. FIGS. 4(a) to 4(d) show the relationships among the currents i_{Lg1}, i_{Lb}, and i_{sw1} (current i_{sw1} is the current flowing into the midpoint P2 of the first HF bridge leg B1), as well as their timing correlations with the switching timing. The current i_{Lg1} of the first inductors L_{g1} (and the current i_{Lg2} of the second inductors L_{g2}, which is 180° out of phase with current i_{Lg1}) is a continuous triangular wave, which is the same as the common continuous conduction mode (CCM) PFC operation. The current i_{Lb}, in contrast, exhibits a trapezoidal waveform. The current i_{sw1} flowing into the midpoint P2 of the first HF bridge leg B1 is the sum of current i_{Lg1} and current i_{Lb}. Notably, at the instant the main switch turns on, i_{sw1} reaches a negative current value -I_{zvs}, indicating that the main switch approaches or achieves the desired ZVS. Note that the second switch S₂ and the fourth switch S₄ serve as main switches during the positive half line cycle, while the first switch S₁ and the third switch S₃ assume this role during the negative half line cycle.

In detail, for the proposed film-capacitor-less iTCM PFC topology, the inductances for the first inductor L_{g1} and the second inductor L_{g2} are identical and denoted as L_{g.} The design equations for inductances L_{g} and L_{b} are provided in Equation (3) and (4), respectively. The variable switching frequency f_{sw}(t) over the line cycle can be expressed as equation (1), and duty cycle d(t) is determined by equation (2).

Referring to FIG. 2, Optionally, in one embodiment of the disclosure, the rectifier 4 further includes a first branch capacitor C_{b} connected between the first branch inductor L_{b} and the middle end P3 of the second HF bridge leg B2.

In detail, FIG. 2 illustrates rectifier 4 according to an embodiment of the disclosure, in which the position of the LC branch is modified to enable the use of low-voltage-rated ceramic capacitors. This topology eliminates the need for the bulky film capacitors, thereby improving the converter power density while maintaining high reliability. To address the aforementioned limitations of the iTCM PFC topology, a novel derivative topology is proposed as shown in FIG. 2. In this topology, the LC branch is reconnected from its original position-between the midpoints of HF bridge legs and the AC neutral line-to a new position between the midpoints of two interleaved HF bridge legs. Meanwhile, in the embodiment, the modified LC branch may be simplified to have only a single inductor (the first branch inductor L_{b}) and a single capacitor (the first branch capacitor C_{b}) connected in series. This modified topology retains the soft-switching characteristics and the separation of high-frequency and low-frequency current paths, similar to the iTCM PFC topology, but with fewer passive components in the LC branch.

Referring to FIG. 3, FIG. 3 shows example simulation waveforms demonstrating the voltage behavior across the first branch capacitor C_{b} in the proposed rectifier 4 of the embodiment of FIG. 2. A key advantage of the proposed iTCM PFC topology in the embodiment is that the first branch capacitor C_{b} in the modified LC branch may be no longer subjected to the full grid voltage. Instead, it may only experience the voltage difference between the average voltages between the midpoint P2 of the first HF bridge leg B1 and the midpoint P3 of the second HF bridge leg B2, which is ideally close to zero. This characteristic, verified through simulation waveforms shown in FIG. 3, allows the use of low-voltage-rated capacitors. As a result, compact ceramic capacitors with small footprints (e.g., 0805 or 1206 package) can be employed, instead of using bulky film capacitors, which significantly reduce footprint of the first branch capacitor C_{b} and improve the converter power density. The small-package ceramic capacitors eliminate the cracking issues associated with large high-voltage types, thereby improving system reliability. Moreover, due to the low voltage operation, the issue of capacitance derating under high voltage bias is eliminated. More importantly, ceramic capacitors offer higher current handling capability, so less multiple parallel units are needed to meet the current requirements, leading to a more compact and robust implementation.

Another benefit of the proposed topology of the embodiment is that the first branch capacitor C_{b} does not carry LF current components. Consequently, no leading capacitive current is injected into the grid side, eliminating the need for additional compensation control typically required to address power quality issues. This further simplifies the control architecture and enhances system efficiency.

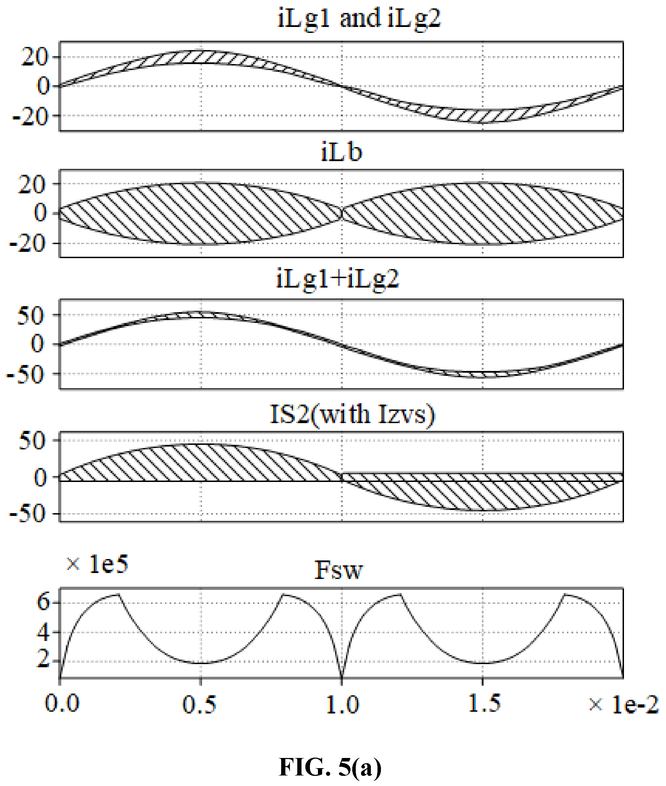

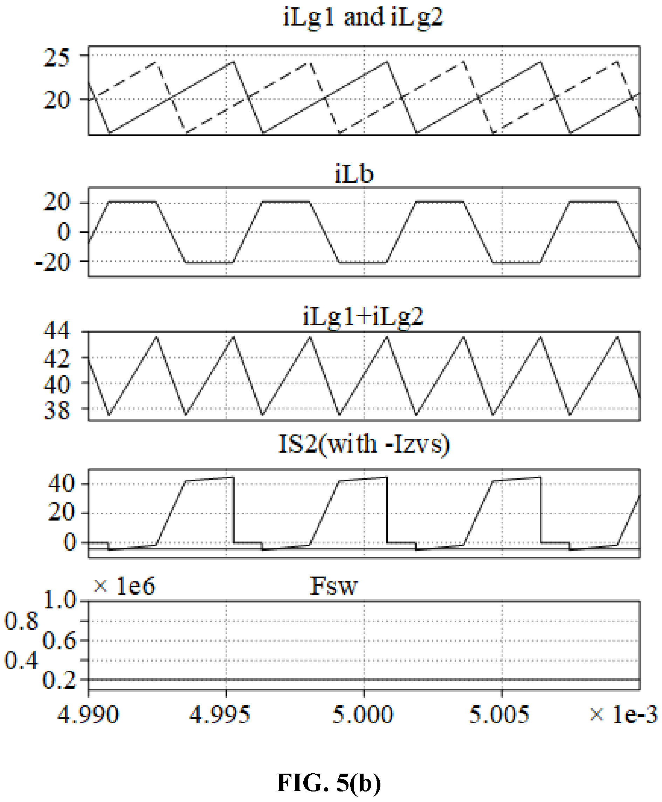

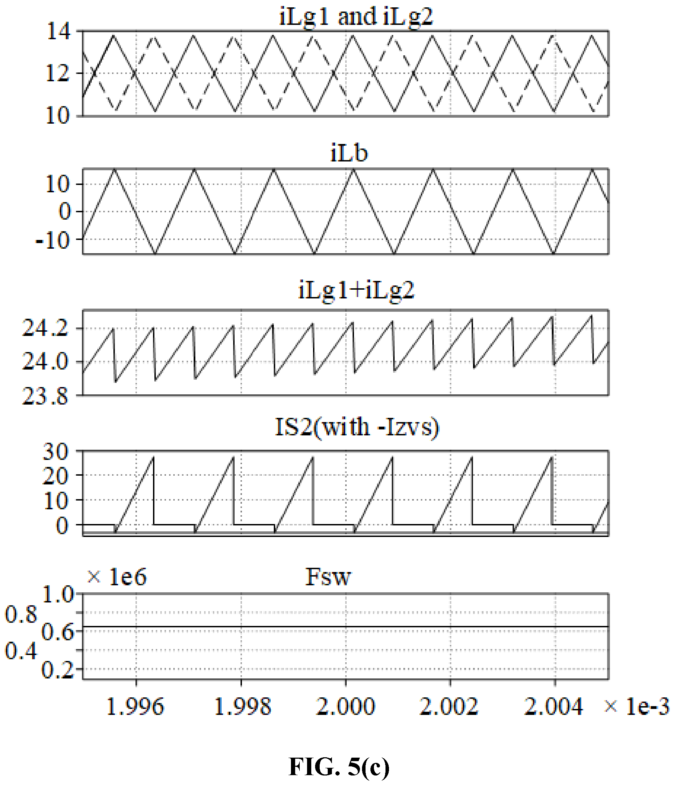

Referring to FIGS. 5(a) to 5(b), FIGS. 5(a) to 5(c) present example simulation waveforms of inductor currents over the entire line cycle along with zoomed-in views for duty cycles greater than ½ and less than ½. These results validate proper current shaping throughout the operating range. In detail, FIGS. 5(a) to 5(c) presents example simulation waveforms obtained using the proposed switching pattern illustrated in FIGS. 4(a) to 4(d), and the variable switching frequency f_{sw}(t) defined in Equation (1). These waveforms include the currents flowing through the first inductor L_{g1}, the second inductor L_{g2}, and the first branch inductor L_{b}, as well as the total current i_{Lg1}+i_{Lg2}. FIG. 5(a) presents the simulation waveforms over an entire line cycle, while FIG. 5(b) and FIG. 5(c) show zoomed-in waveforms corresponding to the duty cycles greater than 1/2 and less than 1/2, respectively. These simulation results validate that the proposed topology achieves proper current shaping and desirable switching behavior throughout the entire line cycle.

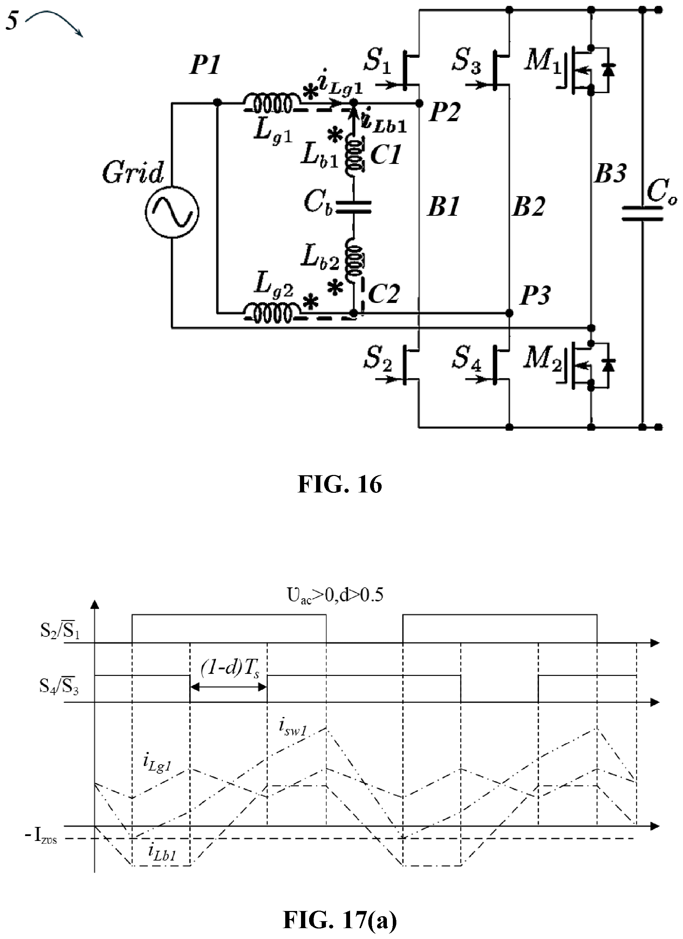

Referring to FIG. 16, FIG. 16 illustrates another proposed rectifier according to an embodiment of the disclosure. Optionally, in one embodiment of the disclosure, the rectifier 5 further includes: a second branch inductor L_{b2} connected between the first branch capacitor C_{b} and the middle end P3 of the second HF bridge leg B2; a first core C1 coupling between the first inductor L_{g1} and the first branch inductor L_{b1}; and a second core C2 coupling between the second inductor L_{g2} and the second branch inductor L_{b2}, wherein a mutual inductance LM1 of the first inductor L_{g1} and the first branch inductor L_{b1} may be approximately equal to a mutual inductance LM2 of the second inductor L_{g2} and the second branch inductor L_{b2}; and the mutual inductances LM1 and LM2 may be approximately equal to the equivalent inductances of the first branch inductor (L_{b1}) and the second branch inductor (L_{b2}), respectively.

In detail, FIG. 16 illustrates a proposed two-phase interleaved film-capacitor-less iTCM PFC topology with coupled inductors, which achieves identical current distribution between two PFC main inductors (the first inductor L_{g1} and the second inductor L_{g2}) and doubles their effective switching frequency. By introducing the coupled inductor concept into the proposed two-phase interleaved film-capacitor-less iTCM PFC topology, a further derived circuit is shown in FIG. 16. This is achieved by splitting a branch inductor into two inductors, the first branch inductor L_{b1} and the second branch inductor L_{b2} (inductance L_{b1} = L_{b2} = L_{b}), and coupling the first inductor L_{g1} with the first branch inductor L_{b1} and coupling the second inductor L_{g2} with the second branch inductor L_{b2}. The mutual inductances between these two pairs of coupled inductors are denoted as LM1 = LM2 = LM, and they are designed with approximately equal value as the inductance L_{b}.

Referring to FIGS. 17(a) to 17(b), FIGS. 17(a) to 17(b) show the switching pattern of the proposed topology in FIG. 16 during the positive half-line cycle. In detail, the switching pattern for the proposed topology with coupled inductors in FIG. 16 is illustrated in FIGS. 17 (a) to 17(b) (for the positive half-cycle, for example). From FIGS. 17(a) to 17(b), it can be observed that the equivalent frequency of i_{Lg1} is doubled, which helps reduce the inductor current ripple and/or reduce inductance, improve the power density. Similar to the previously proposed topology without coupled inductors, the topology with coupled inductors circuit can approach or achieve ZVS by ensuing that i_{sw1} reaches -I_{zvs} before the main switch turns on. For the proposed topology with coupled inductors in FIG. 16, design equations for inductances L_{b_cp} and L_{g_cp} are given in Equation (5) and (6), respectively, and the variable switching frequency f_{sw_cp}(t) can be expressed as Equation (7). ${L}_{b _ cp} = \frac{{V}_{o}}{2 {f}_{sw min} \left(\frac{1}{2}{i}_{gpk}+{I}_{zvs}-\frac{{r}_{Lg} P}{2 {u}_{gpk}}\right)} \left(1-\frac{{u}_{gpk}}{{V}_{o}}\right)$ (5) ${L}_{g _ cp} = \frac{{u}_{gpk} \left(2{u}_{gpk}-{V}_{o}\right)}{2 {r}_{Lg} {f}_{sw min} P} \left(1-\frac{{u}_{gpk}}{{V}_{o}}\right) + {L}_{b _ cp}$ (6) ${f}_{sw _ cp} \left(t\right) = \left\{\begin{matrix}\frac{1 - d \left(t\right)}{4 \left[\frac{1}{2}{i}_{gpk}\left|sin\left(wt\right)\right|+{I}_{zvs}\right]} \left(\frac{{V}_{o}}{M}+\frac{{V}_{o} - 2 {u}_{gpk} \left|sin\left(wt\right)\right|}{{L}_{g} - M}\right) , d \left(t\right) > \frac{1}{2} \\ \frac{d \left(t\right)}{2 \left[\frac{1}{2}{i}_{gpk}\left|sin\left(wt\right)\right|+{I}_{zvs}\right]} \left(\frac{{V}_{o}}{M}+\frac{2 {u}_{gpk} \left|sin\left(wt\right)\right| - {V}_{o}}{{L}_{g} - M}\right) , d \left(t\right) < \frac{1}{2}\end{matrix}\right.$ (7)

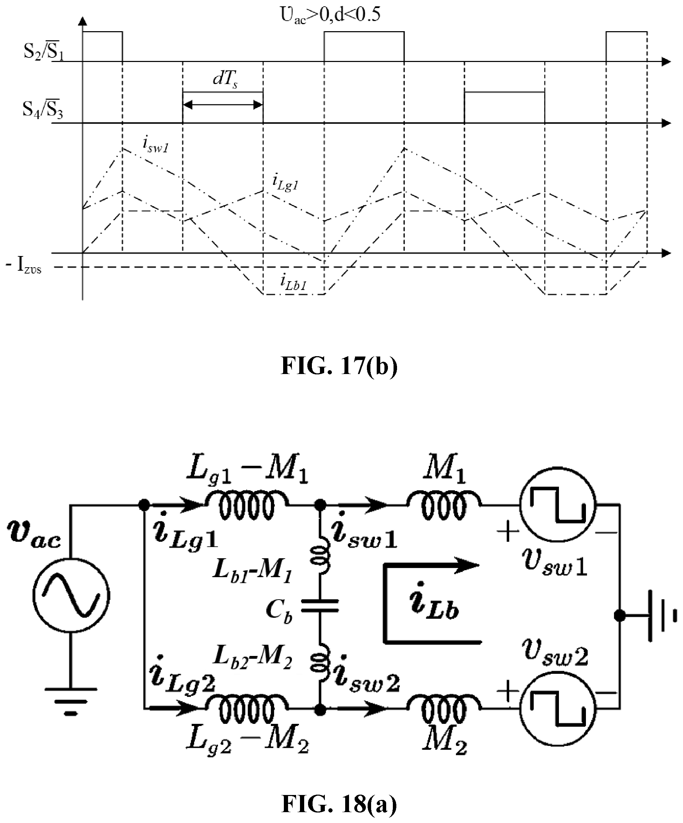

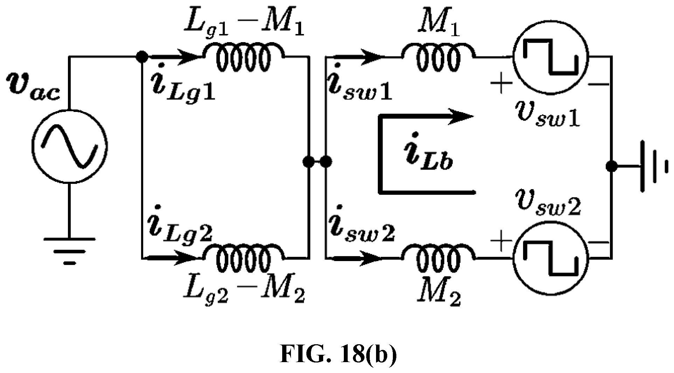

Referring to FIGS. 18(a) to 18(b), FIG. 18(a) depicts a simplified decoupling circuit schematic for the proposed topology in FIG. 16. FIG. 18(b) depicts an equivalent circuit schematic to demonstrate identical current distribution enabled by the proposed coupled-inductor-based configuration in FIG. 16. Moreover, a unique feature of this proposed topology is its ability to achieve identical current distribution between current i_{Lg1} and current i_{Lg2}. To illustrate this feature, a simplified decoupled circuit model is provided in FIG. 18(a). By setting mutual inductance M = L_{b_cp} and noting that the voltage across the first branch capacitor C_{b} is approximately zero, the LC branch in the simplified decoupling circuit can be treated as a short circuit. This leads to the derived equivalent circuit shown in FIG. 18(b), where L_{g1_cp}-M1 and L_{g2_cp}-M2 are directly in parallel. Therefore, current i_{Lg1} and current i_{Lg2} exhibit identical frequency, phase, and amplitude, achieving identical current distribution for current i_{Lg1} and current i_{Lg2}.

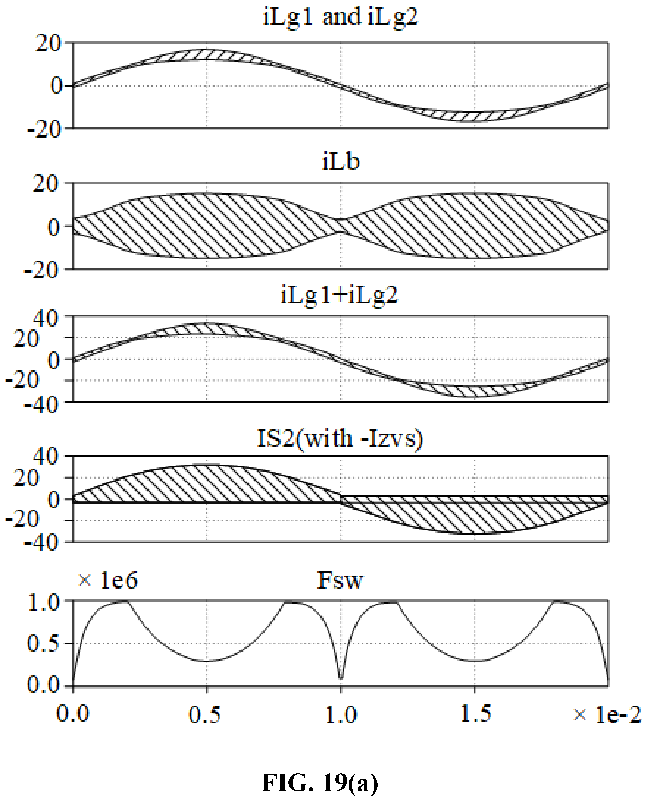

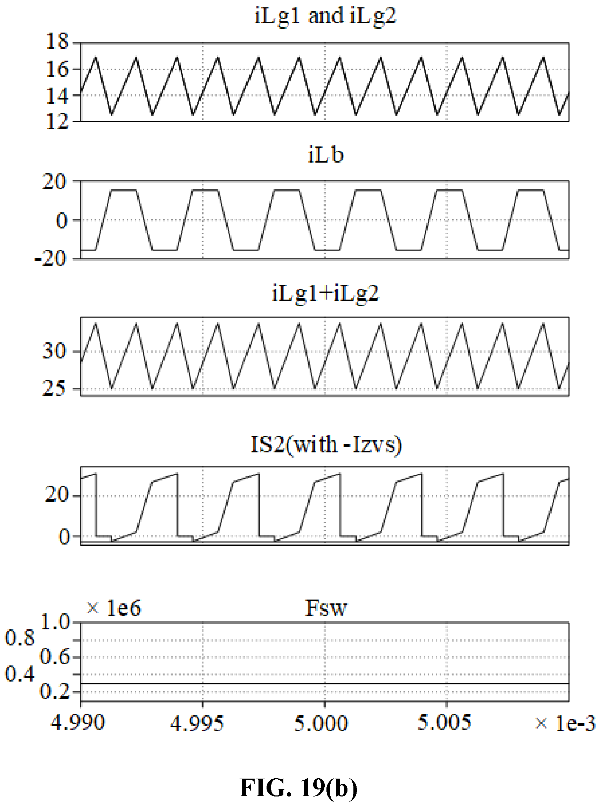

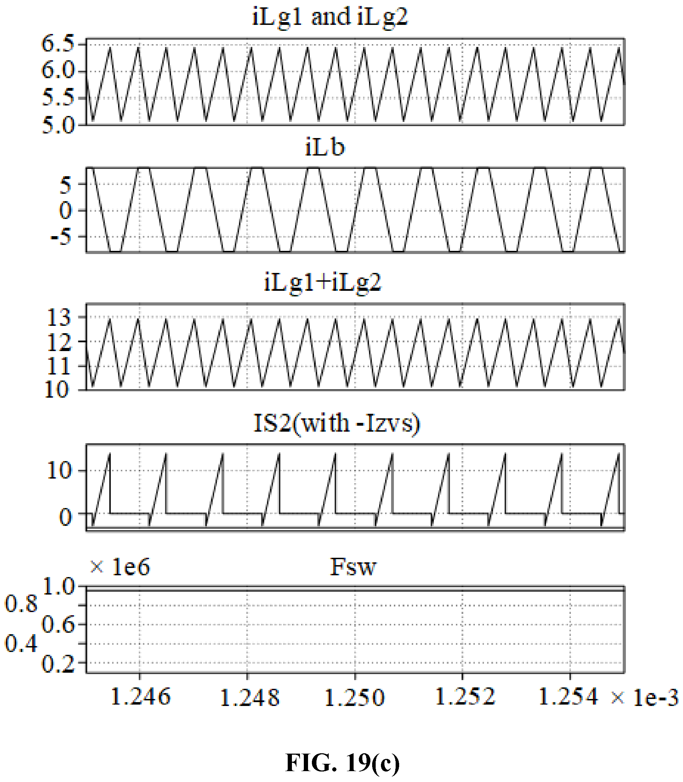

Referring to FIGS. 19(a) to 19(c), FIGS. 19(a) to 19(c) present example simulation waveforms for two-phase interleaved film-capacitor-less iTCM PFC topology with coupled inductors shown in FIG. 16, validating the doubled switching frequency and identical current distribution of current i_{Lg1} of the first inductor L_{g1} and current i_{Lg2} of the second inductor L_{g2}. In detail, FIGS. 19(a)-19(c) presents example simulation waveforms obtained using the switching pattern illustrated in FIG. 17, and the variable switching frequency f_{sw_cp}(t) defined in Equation (7). FIG. 19(a) presents the simulation waveforms over an entire line cycle, while FIGS. 19(b)-(c) show zoomed-in waveforms corresponding to two duty cycle cases: d > ½ and d < ½, respectively. It is evident that current i_{Lg1} and current i_{Lg2} have the same frequency, phase, and amplitude, realizing identical current distribution. And the actual frequency of current i_{Lg1} and current i_{Lg2} is twice of that of current i_{Lb}. It can also be observed that the current through second switch S₂ reaches the -I_{zvs} before turning on the second switch S₂, thereby approaching or achieving ZVS. This characteristic ensures reduced switching losses and improved efficiency in the converter.

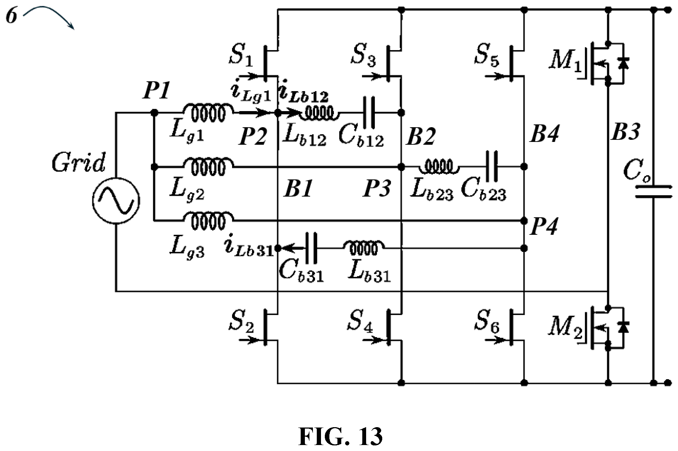

Referring to FIG. 13, FIG. 13 illustrates an extension of another proposed rectifier according to an embodiment of the disclosure. Optionally, in one embodiment of the disclosure, the rectifier 6 further includes: a third HF bridge leg B4 connected to the output capacitor Cₒ in parallel; a third inductor L_{g3} connected between the input end P1 and a middle end P4 of the third HF bridge leg B4; a second branch inductor L_{b23} and a second branch capacitor C_{b23} connected in serial between the middle end P3 of the second HF bridge leg B2 and the middle end P4 of the third HF bridge leg B4; and a third branch inductor L_{b31} and a third branch capacitor C_{b31} connected in serial between the middle end P4 of the third HF bridge leg B4 and the middle end P2 of the first HF bridge leg B1.

In detail, FIG. 13 illustrates an extension of another proposed rectifier according to an embodiment of the disclosure. FIG. 13 illustrates the extension of the film-capacitor-less concept to a three-phase interleaved totem-pole iTCM PFC rectifier. In this design, the first branch inductor L_{b12} and the first branch capacitor C_{b12} are connected between the first HF bridge leg B1 and the second HF bridge leg B2, the second branch inductor L_{b23} and the second branch capacitor C_{b23} are connected between the second HF bridge leg B2 and the third HF bridge leg B3, and the third branch inductor L_{b31} and the third branch capacitor C_{b31} are connected between the third HF bridge leg B3 and the first HF bridge leg B1, utilizing the circulating currents to approach or even achieve ZVS. The inductances for the first inductor L_{g1}, the second inductor L_{g2} and the third inductor L_{g3} are identical and denoted as L_{g_3ph}. The inductances for the first branch inductor L_{b12}, the second branch inductor L_{b23}, and the third branch inductor L_{b31} are identical and denoted as L_{b_3ph}. The design equations for inductances L_{g_3ph} and L_{b_3ph} are given in Equation (8)-(9), respectively. ${L}_{g _ 3 ph} = \frac{{{u}_{gpk}}^{2}}{2 {r}_{Lg} {f}_{sw min} \frac{P}{3}} \left(1-\frac{{u}_{gpk}}{{V}_{o}}\right)$ (8) ${L}_{b _ 3 ph} = \frac{{V}_{o}}{{f}_{sw min} \left(\frac{1}{3}{i}_{gpk}+{I}_{zυs}-\frac{{r}_{Lg} P}{3 {u}_{gpk}}\right)} \left(1-\frac{{u}_{gpk}}{{V}_{o}}\right)$ (9)

The variable switching frequency, f_{sw_3ph}(t), over the line cycle can be expressed as ${f}_{sw _ 3 ph} \left(t\right) = \left\{\begin{matrix}\frac{1}{\frac{1}{3} {i}_{gpk} \left|sin\left(ωt\right)\right| + {I}_{zυs}} \left(\frac{d \left(t\right) {V}_{o}}{{L}_{b _ 3 ph}}+\frac{d \left(t\right) ⋅ {u}_{gpk} \left|sin\left(ωt\right)\right|}{2 {L}_{g _ 3 ph}}\right) , & 0 < d \left(t\right) < \frac{1}{3} \\ \frac{1}{\frac{1}{3} {i}_{gpk} \left|sin\left(ωt\right)\right| + {I}_{zυs}} \left(\frac{{V}_{o}}{3 {L}_{b _ 3 ph}}+\frac{d \left(t\right) ⋅ {u}_{gpk} \left|sin\left(ωt\right)\right|}{2 {L}_{g _ 3 ph}}\right) , & \frac{1}{3} < d \left(t\right) < \frac{2}{3} \\ \frac{1}{\frac{1}{3} {i}_{gpk} \left|sin\left(ωt\right)\right| + {I}_{zυs}} \left(\frac{1 - d \left(t\right) {V}_{o}}{{L}_{b _ 3 ph}}+\frac{d \left(t\right) ⋅ {u}_{gpk} \left|sin\left(ωt\right)\right|}{2 {L}_{g _ 3 ph}}\right) , & \frac{2}{3} < d \left(t\right) < 1\end{matrix}\right.$ (10)

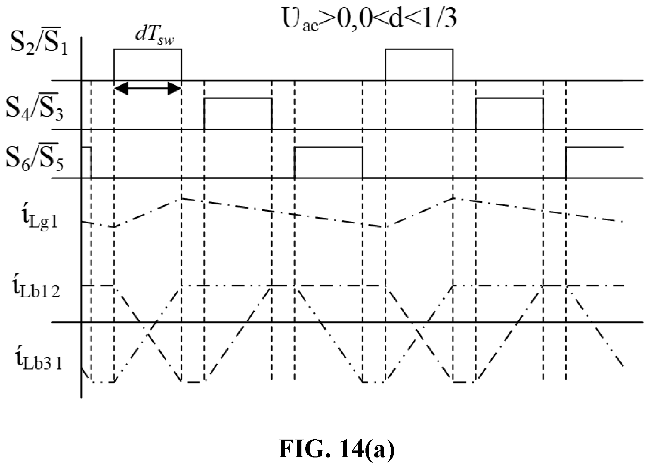

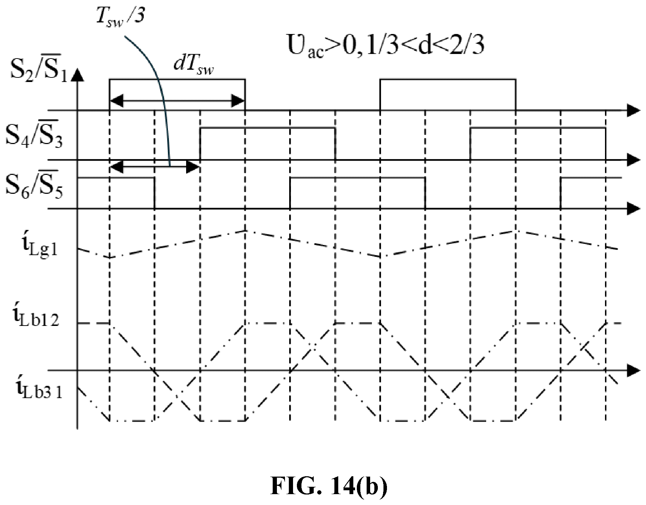

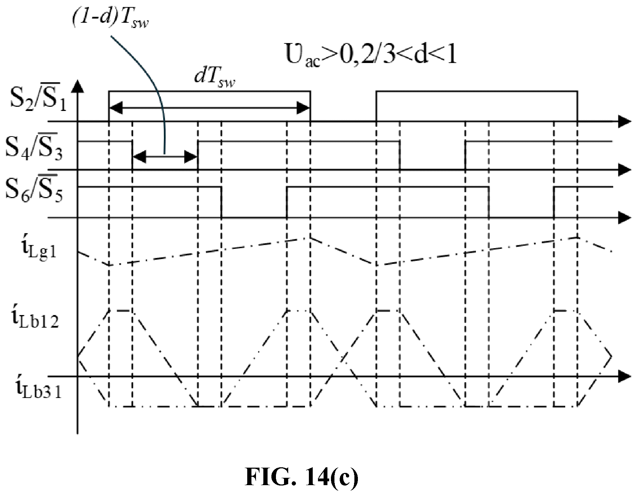

Referring to FIGS. 14(a) to 14(c), FIGS. 14(a) to 14(c) show the switching patterns for the proposed three-phase interleaved film-capacitor-less iTCM PFC topology under various duty cycle conditions. The corresponding switching patterns are shown in FIGS. 14(a) to 14(c) (for the positive half-cycle, as an example), which includes three cases based on the duty cycle: (1) 0 < d < 1/3; (2) 1/3 < d < 2/3; and (3) 2/3 < d < 1.

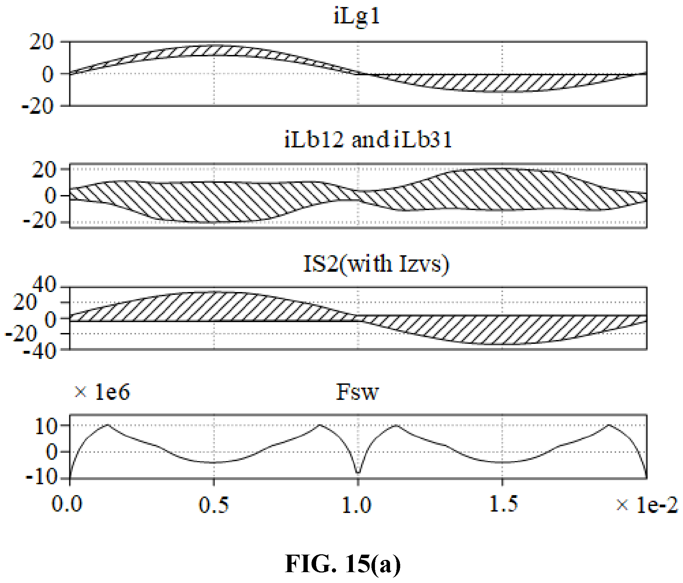

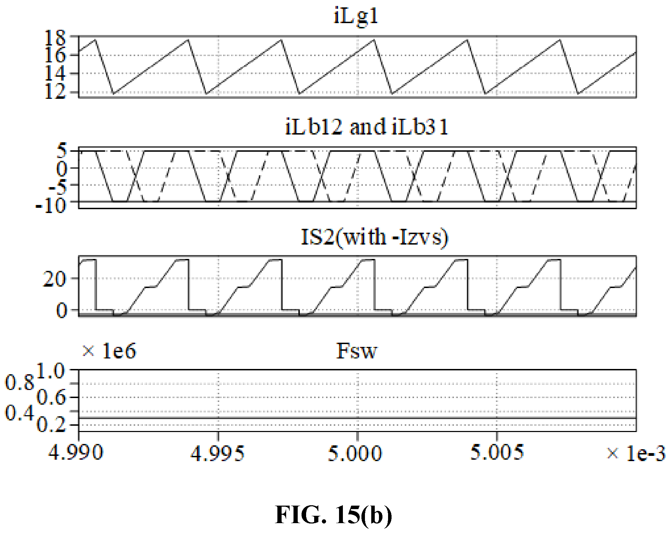

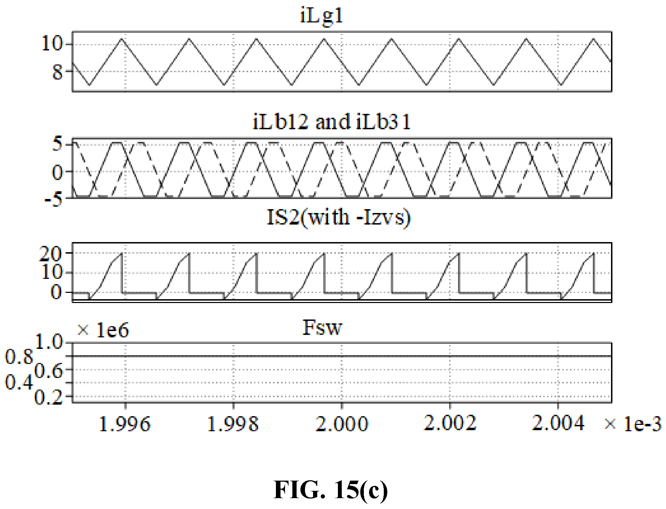

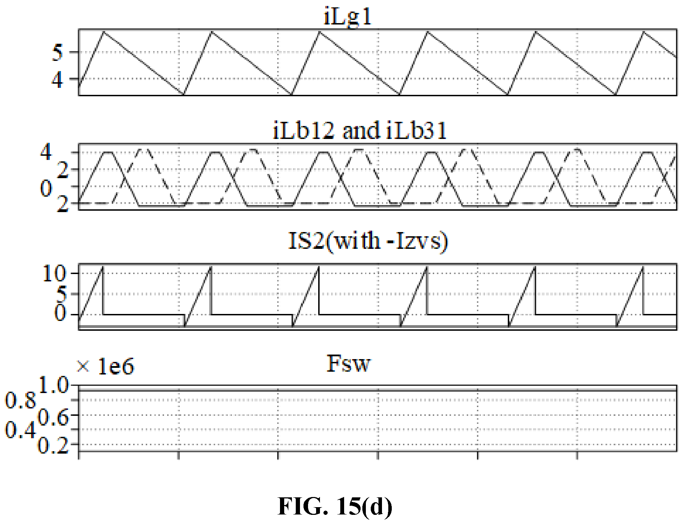

Referring to FIGS. 15(a) to 15(d), FIGS. 15(a) to 15(d) present example simulation waveforms for three-phase interleaved film-capacitor-less iTCM PFC topology, approximately validating ZVS operation and current behavior across a line cycle. In detail, FIGS. 15(a) to 15(d) present example simulation waveforms corresponding to the three-phase interleaved totem-pole film-capacitor-less iTCM PFC rectifier in FIG. 13. FIG. 15(a) presents the simulation waveforms over an entire line cycle, while FIGS. 15(b)-15(d) show zoomed-in waveforms corresponding to three duty cycle cases: 2/3 < d < 1, 1/3 < d < 2/3, and 0 < d < 1/3, respectively. It can be observed that the current through second switch S₂ reaches the -I_{zvs} level before turning on, thereby approaching or achieving ZVS. This characteristic ensures reduced switching losses and improved efficiency in the converter.

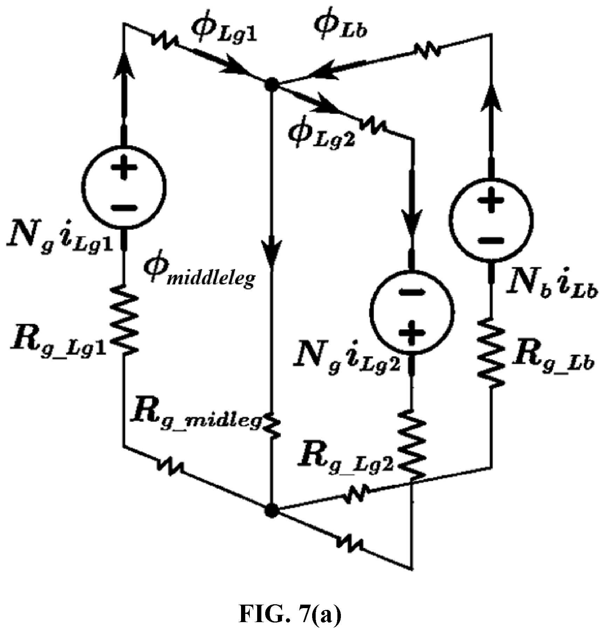

Referring to FIGS. 7(a) to 7(d), FIGS. 7(a) to 7(d) illustrate a magnetic integration structure according to an embodiment of the disclosure. Optionally, in one embodiment of the disclosure, the rectifier further includes core limbs C_{Lg1}, C_{Lg2}, and C_{Lb} for the first inductor L_{g1}, the second inductor L_{g2}, and the first branch inductor L_{b}, respectively and arranged in a symmetric triangular layout and a shared limb Cs positioned centrally between the core limbs C_{Lg1}, C_{Lg2}, and CLb.

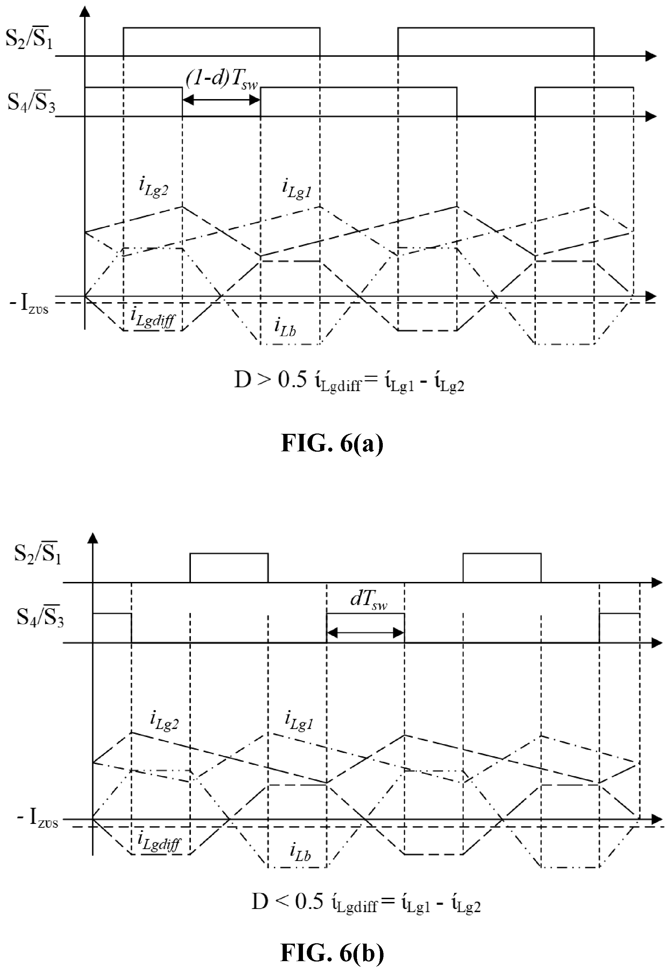

In detail, the current relationships inherent in the proposed film-capacitor-less iTCM PFC topology make it possible to achieve zero magnetic flux at specific locations, ideally zero, or very close to zero in practice, which enables integrated magnetics design and thus achieves high power density. To establish the theoretical basis for this inherent current relationship, the current waveforms during the positive half-line cycle are analyzed. Referring to FIG. 6(a) and FIG. 6(b), FIGS. 6(a) to 6(b) show the inductor current waveforms during the positive half-line cycle, used to derive the magnetic zero-flux condition under duty cycles less than ½ and greater than ½. In detail, FIG. 6(a) and FIG. 6(b) illustrate representative current waveforms under two conditions: when the duty cycle is greater than ½ and when it is less than ½, respectively. The differential current between the current i_{Lg1} and current i_{Lg2}, denoted as i_{Lgdiff}, is a trapezoidal waveform that is phase-opposite to current i_{Lb}.

It can be derived that the maximum magnitudes of current i_{Lb} and current i_{Lgdiff} can be expressed as $\left|{i}_{Lb}\left(t\right)\right| max = \left\{\begin{matrix}\frac{{V}_{o}}{2 {L}_{b}} \frac{1 - d \left(t\right)}{{f}_{sw} \left(t\right)} , & d \left(t\right) > \frac{1}{2} \\ \frac{{V}_{o}}{2 {L}_{b}} \frac{d \left(t\right)}{{f}_{sw} \left(t\right)} , & d \left(t\right) < \frac{1}{2}\end{matrix}\right. , \left|{i}_{Lgdiff}\left(t\right)\right| max = \left\{\begin{matrix}\frac{{V}_{o}}{2 {L}_{g}} \frac{1 - d \left(t\right)}{{f}_{sw} \left(t\right)} , & d \left(t\right) > \frac{1}{2} \\ \frac{{V}_{o}}{2 {L}_{g}} \frac{d \left(t\right)}{{f}_{sw} \left(t\right)} , & d \left(t\right) < \frac{1}{2}\end{matrix}\right.$ (11)

It can be mathematically proven that the maximum magnitudes of current i_{Lb} and current i_{Lgdiff} are inversely proportional to their respective inductance values, that is $\frac{\left|{i}_{Lgdiff}\left(t\right)\right| max}{\left|{i}_{Lb}\left(t\right)\right| max} = \frac{{L}_{b}}{{L}_{g}}$ (12)

This also implies that the instantaneous current expressions adhere to the time-domain relationship described in Equation (13). $\left({i}_{Lg 1}\left(t\right)-{i}_{Lg 2}\left(t\right)\right) + \frac{{L}_{b}}{{L}_{g}} {i}_{Lb} \left(t\right) = 0$ (13)

For inductors with air gaps, the inductance is determined by the number of turns and magnetic reluctance of the air gap. Accordingly, the inductances L_{g} and L_{b} follows ${L}_{g} = \frac{{{N}_{g}}^{2}}{{R}_{g _ Lg}} , {L}_{b} = \frac{{{N}_{b}}^{2}}{{R}_{g _ Lb}}$ (14) where N_{g} and N_{b} represent the number of turns of the windings of L_{g} and L_{b}, respectively. R_{g_Lg} and R_{g_Lb} denote the magnetic reluctances of the corresponding air gaps.

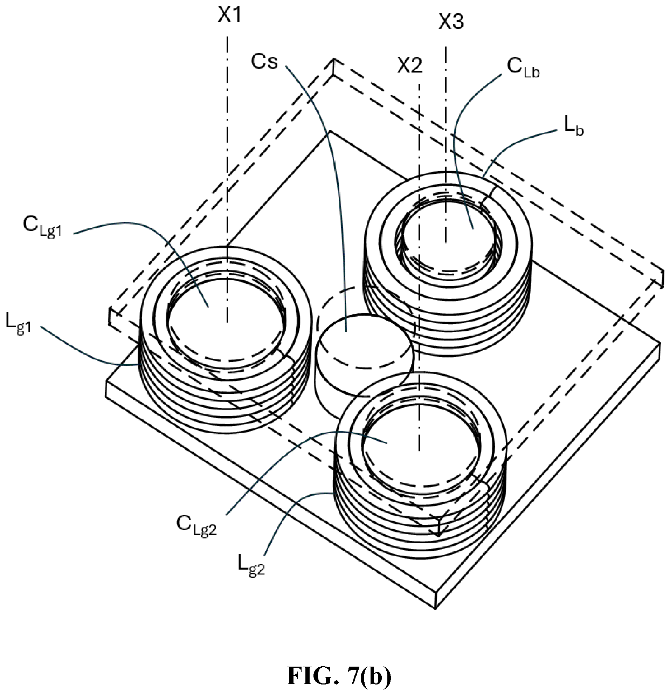

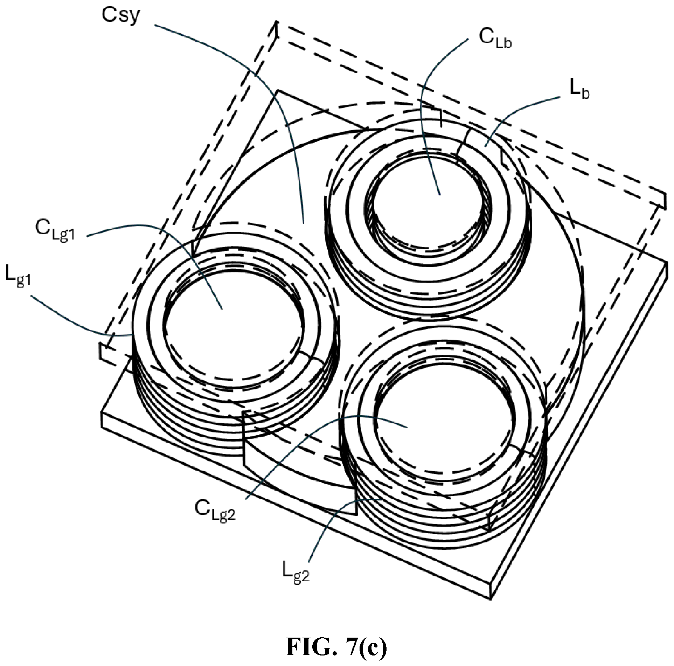

Referring to FIGS. 7(b) and 7(c), optionally, in one embodiment of the disclosure, a cross-section of the shared limb Cs is shaped circular or a cross-section of the shared limb Csy is "Y" shaped.

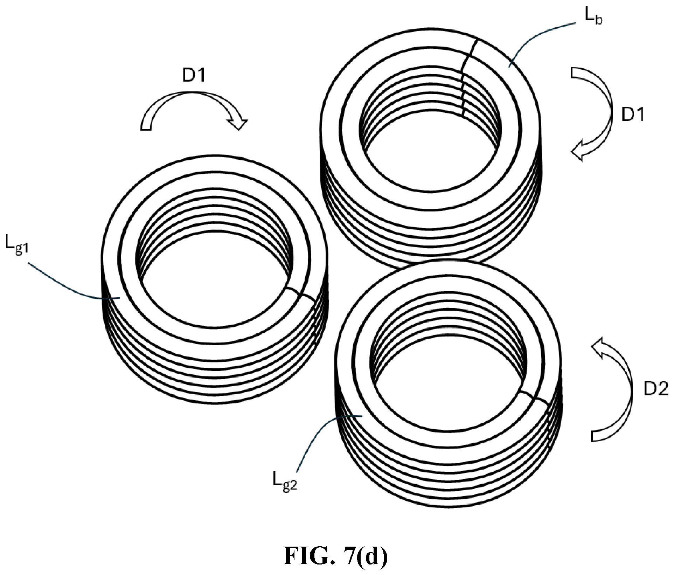

Referring to FIG. 7(d), optionally, in one embodiment of the disclosure, windings of the first inductor L_{g1} and the first branch inductor L_{b} have a same winding direction D1 inversed with a winding direction D2 of a winding of the second inductor L_{g2}.

In detail, FIGS. 7(a) to 7(d) illustrate a triangular layout based magnetic integration structure for the proposed topology, enabling full flux cancellation in the central shared limb, along with its magnetic equivalent circuit, physical layouts and winding arrangement. Taking the magnetic circuit model in FIG. 7(a) as an example, the flux generated by each winding excitation can be expressed as ${ϕ}_{iLg 1} \left(t\right) = \frac{{N}_{g} {i}_{Lg 1} \left(t\right)}{{R}_{g _ Lg}} , {ϕ}_{iLg 2} \left(t\right) = \frac{{N}_{g} {i}_{Lg 2} \left(t\right)}{{R}_{g _ Lg}} , {ϕ}_{iLb} \left(t\right) = \frac{{N}_{b} {i}_{Lb} \left(t\right)}{{R}_{g _ Lb}}$ (15)

When the winding directions follow the specific arrangement in FIG. 7(d) where the current directions D1 of current i_{Lg1} and i_{Lb} are aligned and opposite to the current directions D2 of current i_{Lg2}, the resulting flux in the shared (non-gapped) limb can be expressed as ${ϕ}_{middleleg} \left(t\right) = {ϕ}_{iLg 1} \left(t\right) - {ϕ}_{iLg 2} \left(t\right) + {ϕ}_{iLb} \left(t\right) = \frac{{N}_{g}}{{R}_{g _ Lg}} \left({i}_{Lg 1}\left(t\right)-{i}_{Lg 2}\left(t\right)\right) + \frac{{N}_{b}}{{R}_{g _ Lb}} {i}_{Lb} \left(t\right)$ (16)

By substituting Equations (13)-(14) into (16), it can be observed that when N_{g}=N_{b}, the instantaneous magnetic flux in the shared limb becomes zero, that is ${ϕ}_{middleleg} \left(t\right) = \frac{{N}_{b}}{{R}_{g _ Lb}} \left(1-\frac{{N}_{b}}{{N}_{g}}\right) {i}_{Lb} \left(t\right) {=}^{{N}_{b} = {N}_{g}} 0$ (17)

Based on this characteristic, a major benefit can be achieved: the magnetic flux in the shared limb can be nearly zero, so the physical volume of shared limb can be minimized, reducing the overall magnetics volume. In the design shown in FIGS. 7(b) and 7(c), three core limbs C_{Lg1}, C_{Lg2} and C_{Lb} are arranged in a symmetric triangular layout, with the shared limb Cs or Csy positioned centrally between them. This configuration ensures that the flux generated by each winding flows through the shared limb Cs or Csy, thereby maximizing the flux cancellation. The cross-sectional shape of the central shared limb Cs or Csy is not restricted-it may be circular, as illustrated in FIG. 7(b), or irregular, as shown in FIG. 7(c). Also, its cross-sectional area can be freely adjusted in size. It is noted that the cross-sectional areas of the core limb C_{Lg1} and/or C_{Lg2}, and C_{Lb} may be not equal, due to the required number of winding turns N_{g}=N_{b} and selected inductance L_{g}>L_{b}.

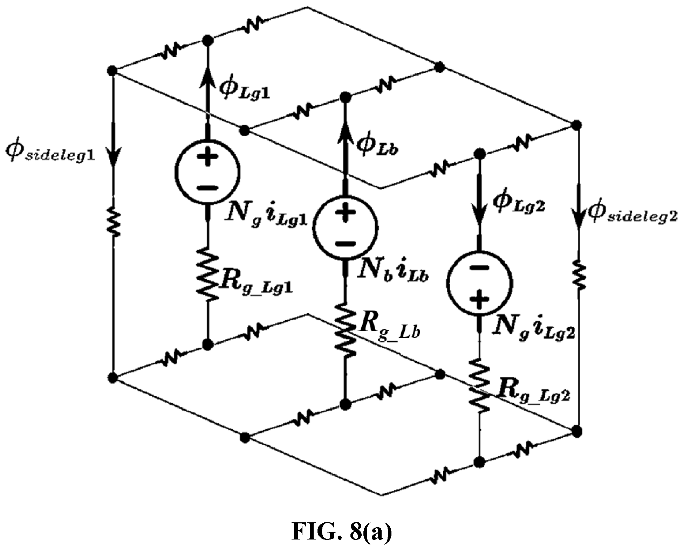

Referring to FIGS. 8(a) to 8(c), FIGS. 8(a) to 8(c) illustrate another magnetic integration structure according to an embodiment of the disclosure. Optionally, in one embodiment of the disclosure, the rectifier further includes core limbs C_{Lg1}, C_{Lg2}, and C_{Lb} for the first inductor L_{g1}, the second inductor L_{g2}, and the first branch inductor L_{b}, respectively and arranged in a linear layout L1 and two elongation-shaped shared limbs Cs1 disposed parallel with the linear layout L1 and symmetrically positioned at two long sides of the core limbs C_{Lg1}, C_{Lg2}, and C_{Lb}, respectively.

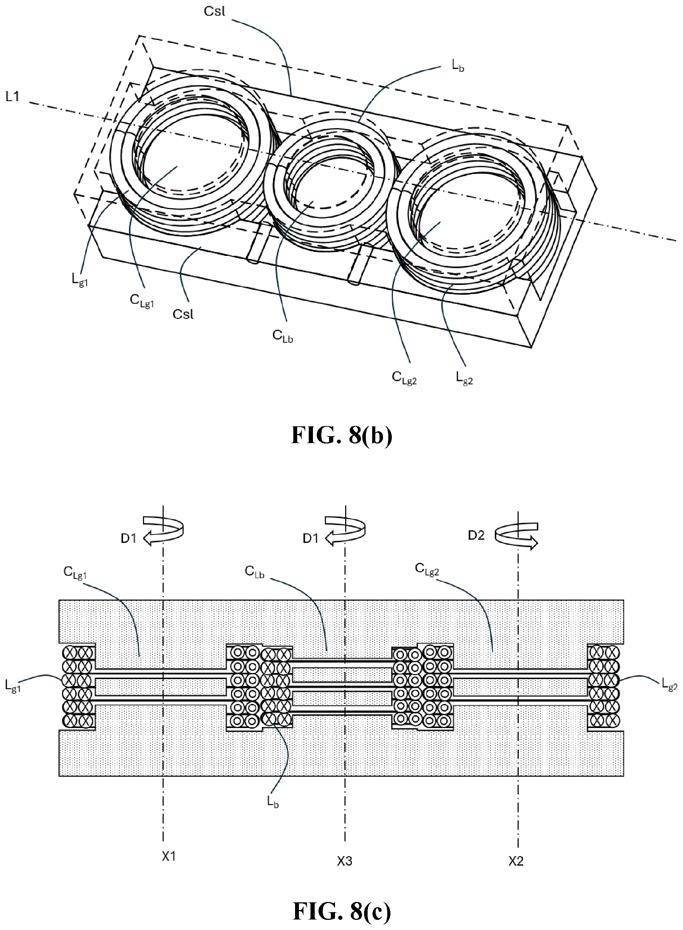

In detail, FIGS. 8(a) to 8(c) illustrate an alternative linear magnetic integration structure with shared limbs located the front and back sides of the magnetic core, along with its magnetic equivalent circuit and winding arrangement. The proposed magnetic flux cancellation principle (as defined in Equation (17)) can be further extended to various alternative configurations. As shown in FIG. 8(b), the three core limbs C_{Lg1}, C_{Lg2}, and C_{Lb} are aligned in a linear layout L1, with the shared limbs Csl symmetrically positioned at the front and rear sides of the core limbs C_{Lg1}, C_{Lg2}, and C_{Lb}. The corresponding magnetic equivalent circuit is shown in FIG. 8(a), and the winding arrangements are depicted in FIG. 8(c), where the currents i_{Lg1} and i_{Lb} flow in the same direction D1, while current i_{Lg2} flows in the opposite direction D2. Compared to the triangular layout in FIGS. 7(b) or 7(c), the structure in FIG. 8(b) divides the shared limb into two segments, which helps reduce the magnetic flux density in the horizontal core plates, or alternatively allows for thinner horizontal core plates to be used. It is noted that the cross-sectional areas for core limbs C_{Lg1} and/or C_{Lg2} and C_{Lb} may be not equal, due to the required number of winding turns N_{g}=N_{b} and selected inductance L_{g}>L_{b}.

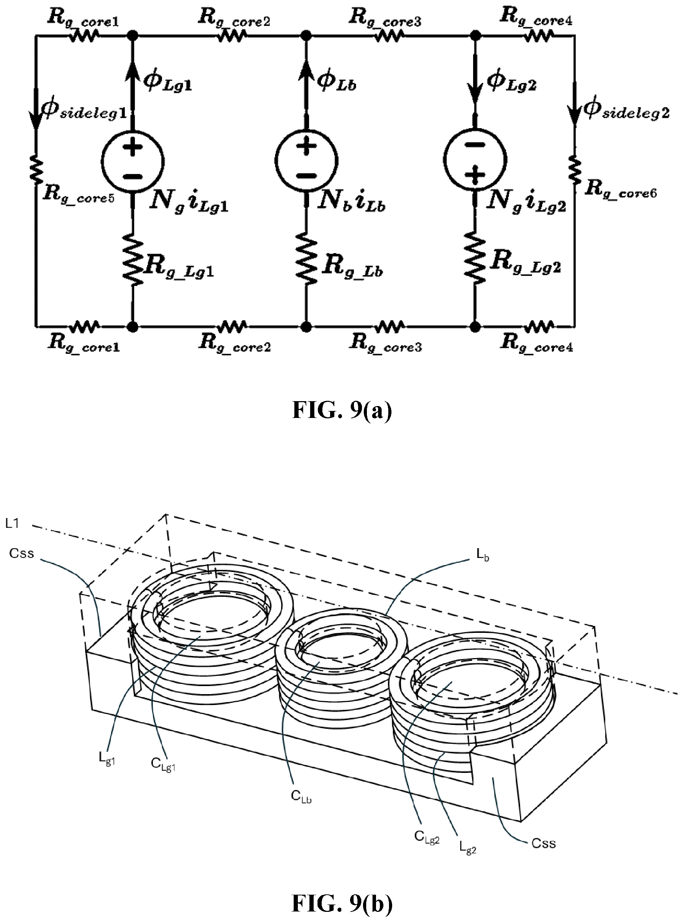

Referring to FIGS. 9(a) to 9(c), FIGS. 9(a) to 9(c) illustrate another magnetic integration structure according to an embodiment of the disclosure. Optionally, in one embodiment of the disclosure, the rectifier further includes core limbs C_{Lg1}, C_{Lg2}, and C_{Lb} for the first inductor L_{g1}, the second inductor L_{g2}, and the first branch inductor L_{b}, respectively and arranged in a linear layout L1 and two shared limbs Css distributed parallel with the linear layout L1 and symmetrically positioned at two short sides of the core limbs C_{Lg1}, C_{Lg2}, and C_{Lb}.

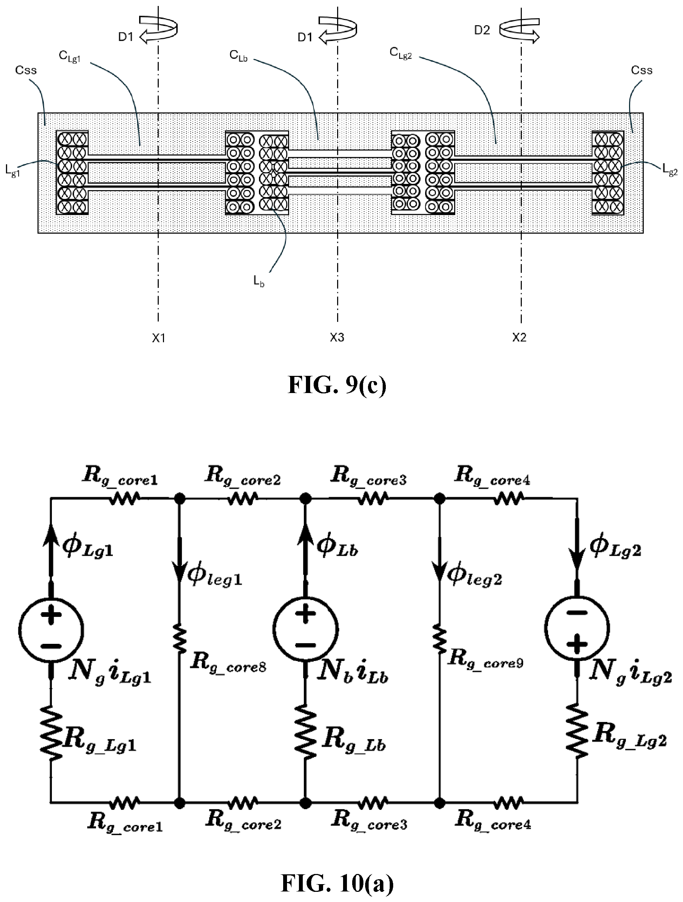

In detail, FIGS. 9(a) to 9(c) illustrate another linear magnetic integration structure with shared limbs Css located on the left and right sides of the magnetic core, along with its magnetic equivalent circuit and winding arrangement. A similar alternative magnetic structure is illustrated in FIG. 9(b). As shown in FIG. 9(b), the three core limbs C_{Lg1}, C_{Lg2}, and C_{Lb} are arranged linearly, similar to FIG. 8(b); however, the shared limbs Css are now positioned on the left and right sides of magnetic core. The corresponding magnetic equivalent circuit is illustrated in FIG. 9(a), and the winding arrangements are indicated in FIG. 9(c). The currents i_{Lg1} and i_{Lb} flow in the same direction D1, while i_{Lg2} flows in the opposite direction D2, consistent with the flux cancellation condition defined in Equation (17). Since the shared limbs Css are now placed on the lateral sides (short sides aligned with the longest physical dimension), this configuration enables a reduction in the overall width and magnetic core volume compared to the structure in FIG. 8(b). It is noted that the cross-sectional areas for the core limbs C_{Lg1} and/or C_{Lg2} and C_{Lb} may be not equal, due to the required number of winding turns N_{g}=N_{b} and selected inductance L_{g}>L_{b}.

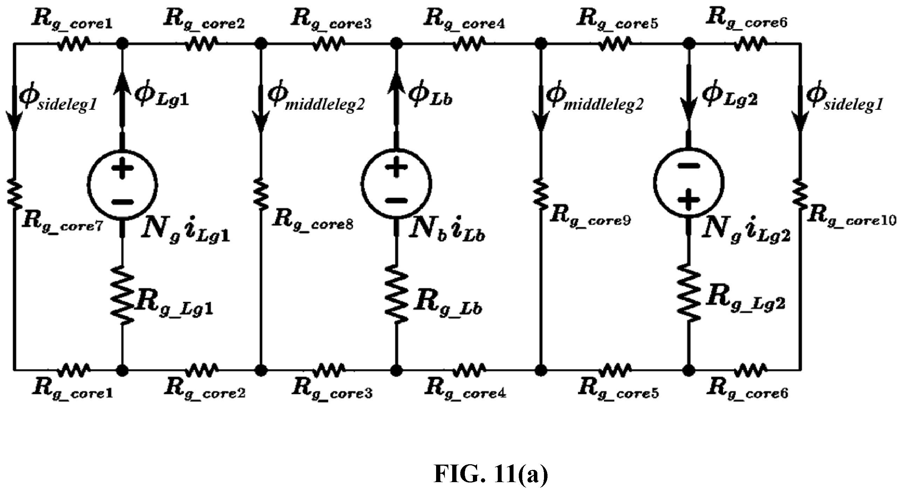

Referring to FIGS. 11(a) to 11(c), FIGS. 11(a) to 11(c) illustrate another magnetic integration structure according to an embodiment of the disclosure. Optionally, in one embodiment of the disclosure, the rectifier further includes two further shared limbs Csc disposed between two adjacent core limbs C_{Lg1}/C_{Lb} or between two adjacent core limbs C_{Lb}/C_{Lg2}, respectively.

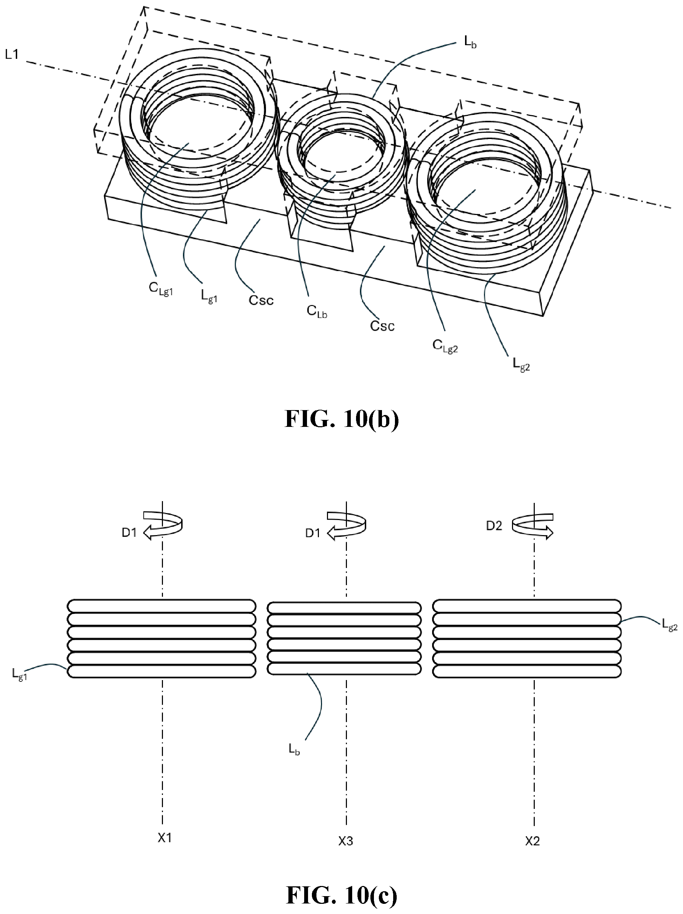

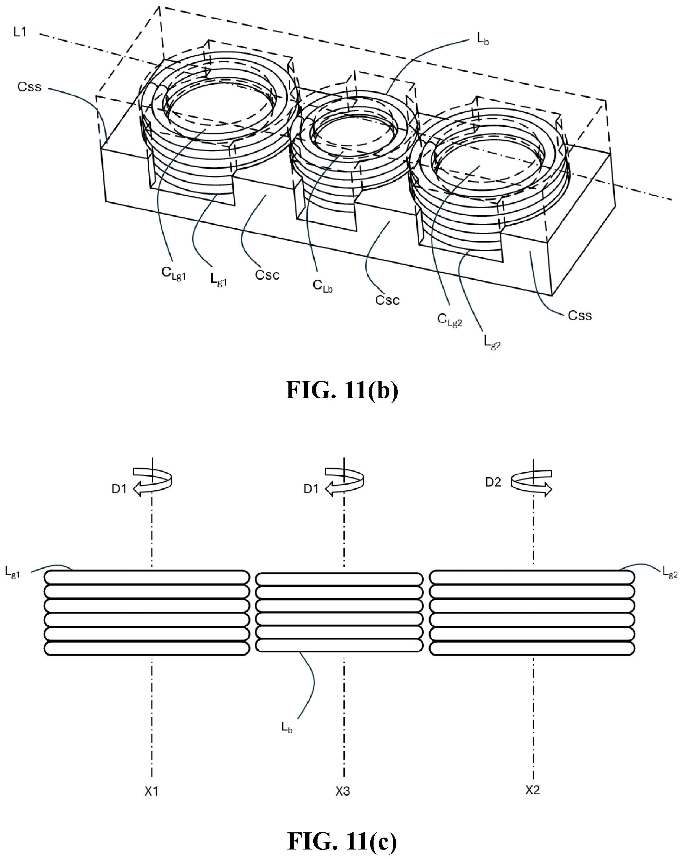

In detail, FIGS. 11(a) to 11(c) illustrate a linear magnetic integration structure with shared limbs located both on the left/right sides and between central core limbs, along with its magnetic equivalent circuit and winding arrangement. Furthermore, a mixed magnetic structure can be derived as FIG. 11(b), by combining the structures shown in FIG. 9(b) and FIG. 10(b). In this configuration, the shared limb Css and Csc incorporates both side legs and middle legs, capable of improving or even optimizing volume utilization while balancing the magnetic flux distribution. The corresponding magnetic equivalent circuit is illustrated in FIG. 11(a), and the winding arrangements are indicated in FIG. 11(c), where currents i_{Lg1} and i_{Lb} flow in the same direction D1, while i_{Lg2} flows in the opposite direction D2, maintaining the required flux cancellation condition defined in Equation (17). This configuration achieves a good trade-off between the magnetic total volume and core loss distribution. It is noted that the cross-sectional areas for core limbs C_{Lg1} and/or C_{Lg2} and C_{Lb} may be not equal, due to the required number of winding turns N_{g}=N_{b} and selected inductance L_{g}>L_{b}.

Referring to FIGS. 10(a) to 10(c), FIGS. 10(a) to 10(c) illustrate a modified magnetic integration structure according to another embodiment of the disclosure. Optionally, in one embodiment of the disclosure, the rectifier further includes core limbs C_{Lg1}, C_{Lg2}, and C_{Lb} for the first inductor L_{g1}, the second inductor L_{g2}, and the first branch inductor L_{b}, respectively and arranged in a linear layout L1 and two shared limbs Csc positioned between two adjacent core limbs C_{Lg1}/C_{Lb} or between two adjacent core limbs C_{Lb}/C_{Lg2}, respectively.

In detail, FIGS. 10(a) to 10(c) illustrate a modified linear magnetic integration structure with shared limbs Csc positioned centrally between core limbs, along with its magnetic equivalent circuit and winding arrangement. As shown in FIG. 10(b), the three core limbs C_{Lg1}, C_{Lg2}, and C_{Lb} are arranged linearly, similar to FIG. 9(b); however, the shared limbs Csc are now relocated to the center, positioned between each pair of adjacent core limbs (i.e., core limbs C_{Lg1} and C_{Lb}). The corresponding magnetic equivalent circuit is illustrated in FIG. 10(a), and the winding arrangements are indicated in FIG. 10(c), where currents i_{Lg1} and i_{Lb} flow in the same direction D1, while i_{Lg2} flows in the opposite direction D2, maintaining the required flux cancellation condition defined in Equation (17). By repositioning the shared limbs from the sides to the center, the overall length along the longest axis is reduced. However, since the fluxes excited by the outer windings can now only flow in one direction, the required cross-sectional area of the core backplate slightly increases. It is noted that the cross-sectional areas for core limbs C_{Lg1} and/or C_{Lg2} and C_{Lb} may be not equal, due to the required number of winding turns N_{g}=N_{b} and selected inductance L_{g}>L_{b}.

Referring to FIGS. 8(b), 9(b), 10(b), and 11(b), optionally, in one embodiment of the disclosure, the core limb C_{Lb} for the first branch inductor L_{b} is disposed between the core limbs C_{Lg1} and C_{Lg2} for the first inductor L_{g1} and the second inductor L_{g2}.

Referring to FIGS. 7(b), 8(b), 8(c), 9(b), 9(c),10(b), 10(c), 11(b),and 11(c), optionally, in one embodiment of the disclosure, the core limbs C_{Lg1}, C_{Lg2}, and C_{Lb} are disposed side by side, and axes X1, X2, and X3 of the core limbs C_{Lg1}, C_{Lg2}, and C_{Lb} are disposed parallel to each other.

Optionally, in some embodiments, the abovementioned rectifiers may include two-phase interleaved totem-pole power factor correction (PFC) rectifiers. In further some embodiments, the two-phase interleaved totem-pole PFC rectifiers may be configured as integrated triangular current mode (iTCM) rectifiers capable of eliminating film-capacitor.

In detail, the topology features an LC branch configuration that ensures near-zero voltage across the auxiliary first branch capacitor C_{b}, thereby eliminating the need for high-voltage-rated film capacitors that are bulky and costly. Instead, compact low-voltage-rated ceramic capacitors are employed, significantly improving power density. The LC branch also facilitates the injection of circulating current to achieve zero-voltage switching or near zero-voltage switching for high efficiency. A specific winding arrangement and turns ratio configuration among three power inductors are introduced, enabling the creation of zero-flux or near zero-flux regions within magnetic core, laying the foundation for magnetic integration. Various integrated magnetic designs are proposed that utilize shared-limb structures and near zero-flux features to minimize magnetic component volume. Furthermore, a DC bias compensation control strategy is presented to eliminate the physical first branch capacitor C_{b}, thereby reducing cost and simplifying the power stage. The proposed topology is inherently scalable and can be extended to three-phase interleaved iTCM PFC systems. Additionally, coupled inductors are introduced into two-phase interleaved film-capacitor-less iTCM PFC topology to derive a variant, which achieves frequency doubling and phase alignment of the grid-side inductor currents, thereby effectively reducing current ripple and minimizing magnetic component size.

In detail, the present disclosure relates to power factor correction (PFC) rectifier topologies and, more specifically, to a film-capacitor-less interleaved totem-pole integrated triangular current mode (iTCM) rectifier. The iTCM PFC topology typically requires bulky, high-voltage-rated film capacitors to track the low-frequency grid voltage. These film capacitors increase system volume and cost, and limit power density. Moreover, because the voltage across the film capacitors closely follows the grid voltage, it introduces a leading capacitive current into the input, resulting in input current distortion and degraded power quality.

To overcome these issues, the present disclosure proposes a rectifier, in particular, an iTCM PFC topology featuring a modified LC branch configuration, in which the auxiliary first branch capacitor maintains a near-zero voltage under ideal conditions. This eliminates the need for high-voltage-rated film capacitors and enables the use of compact, low-voltage-rated ceramic capacitors, thereby significantly improving power density and system reliability. Additionally, the LC branch facilitates the injection of a circulating current to approach or achieve zero-voltage switching (ZVS) or near zero-voltage switching for the main switches, without introducing leading reactive current into the power grid that would otherwise compromise power quality.

Building on this foundation, this disclosure further introduces a specific winding arrangement and turn-ratio configuration among power inductors to create (near) zero-flux regions within the magnetic core, providing a theoretical basis for magnetic integration. Based on this principle, various integrated magnetic structures are proposed that utilize shared-limb configurations to minimize core volume and reduce magnetic losses.

Moreover, a DC bias compensation control strategy is developed to eliminate the need for the physical auxiliary first branch capacitor entirely, further simplifying the power stage and reducing cost. The proposed topology is inherently scalable and can be extended to three-phase interleaved iTCM PFC rectifier by appropriately placed LC branches. In addition, a variant topology incorporating coupled inductors is introduced, which achieves frequency doubling and phase alignment of the grid-side inductor currents, effectively reducing current ripple of inductors and enabling further miniaturization of magnetic components.

In the developed integrated magnetic designs, the number of turns on each core limb is not restricted and may be freely selected based on design requirements. Each core limb may include a single air gap or multiple distributed air gaps having smaller segments. Furthermore, the cross-sectional shape of each core limb is not limited to any particular geometry; it may be circular, elliptical, polygonal, or any other suitable shape depending on thermal, mechanical, or magnetic considerations.

The disclosure addresses the issues of prior art by proposing a film-capacitor-less interleaved totem-pole iTCM PFC topology. By modifying the position of the LC branch, the voltage stress across the auxiliary first branch capacitor is significantly reduced, enabling the use of compact, low-voltage-rated ceramic capacitors in place of bulky film capacitors. Unlike the diode-bridge-based implementation in prior art, the proposed topology adopts an active-switch-based totem-pole phase leg, thereby minimizing conduction losses introduced by low-frequency semiconductors and improving overall efficiency. Compared to prior art, the proposed architecture supports higher power ratings through interleaving, where the circulating current is distributed between two interleaved high-frequency bridge legs. This interleaved configuration also mitigates oscillatory ringing caused by parasitic resonances, which are commonly observed in the topology of prior art.

Furthermore, the disclosure introduces a magnetic winding arrangement to achieve near zero-flux regions within the magnetic core, enabling compact integrated magnetics. The proposed topology is inherently scalable to three-phase interleaved configurations and further supports coupled-inductor extensions to reduce ripple current and shrink magnetic component volume.

Compared to prior art, the embodiment of the disclosure may eliminate the need for film capacitors by modifying the LC branch configuration, enabling the use of compact low-voltage-rated ceramic capacitors. In addition, it introduces magnetic integration strategies based on zero-flux features by specific winding configurations, reducing magnetic volume while preserving performance. A DC bias compensation control strategy is also developed to eliminate the need for the physical auxiliary capacitor entirely, further simplifying the power stage and reducing cost. The embodiments of the proposed topology may support two-phase and three-phase interleaved PFC implementations and further enable coupled inductor variants that may reduce current ripple and improve magnetic design.

Through these features, the disclosure achieves high efficiency, high power density, and improved power quality, making it well-suited for modern high-performance power conversion applications.

Although various embodiments of the present disclosure have been described in detail herein, one of ordinary skill in the art would readily appreciate modifications and other embodiments without departing from the spirit and scope of the present disclosure as stated in the appended claims.

## Claims

1. A rectifier, comprising:
an input end;
an output capacitor (Cₒ);
a first high frequency (HF) bridge leg (B1), a second HF bridge leg (B2), and a line frequency (LF) bridge leg (B3) all connected to the output capacitor (Cₒ) in parallel;
a first inductor (L_{g1}) connected between the input end and a middle end of the first HF bridge leg (B1);
a second inductor (L_{g2}) connected between the input end and a middle end of the second HF bridge leg (B2); and
a first branch inductor (L_{b}) connected between the middle end of the first HF bridge leg (B1) and the middle end of the second HF bridge leg (B2).

2. The rectifier according to claim 1, further comprising a first branch capacitor (C_{b}) connected between the first branch inductor (L_{b}) and the middle end of the second HF bridge leg (B2).

3. The rectifier according to claim 2, further comprising:
a second branch inductor (L_{b2}) connected between the first branch capacitor (C_{b}) and the middle end of the second HF bridge leg (B2);
a first core coupling between the first inductor (L_{g1}) and the first branch inductor (L_{b1}); and
a second core coupling between the second inductor (L_{g2}) and the second branch inductor (L_{b2}), wherein a mutual inductance (LM1) of the first inductor (L_{g1}) and the first branch inductor (L_{b1}) is approximately equal to a mutual inductance (LM2) of the second inductor (L_{g2}) and the second branch inductor (L_{b2}); and the mutual inductances LM1 and LM2 are approximately equal to the equivalent inductances of the first branch inductor (L_{b1}) and the second branch inductor (L_{b2}), respectively, or the rectifier further comprising:
a third HF bridge leg (B4) connected to the output capacitor (Cₒ) in parallel;
a third inductor (L_{g3}) connected between the input end and a middle end of the third HF bridge leg (B4);
a second branch inductor (L_{b23}) and a second branch capacitor (C_{b23}) connected in serial between the middle end of the second HF bridge leg (B2) and the middle end of the third HF bridge leg (B4); and
a third branch inductor (L_{b31}) and a third branch capacitor (C_{b31}) connected in serial between the middle end of the third HF bridge leg (B4) and the middle end of the first HF bridge leg (B1).

4. The rectifier according to any one of claims 1 to 3, further comprising core limbs for the first inductor (L_{g1}), the second inductor (L_{g2}), and the first branch inductor (L_{b}), respectively and arranged in a symmetric triangular layout and a shared limb positioned centrally between the core limbs, wherein a cross-section of the shared limb is shaped circular or "Y" shaped.

5. The rectifier according to any one of claims 1 to 3, further comprising core limbs for the first inductor (L_{g1}), the second inductor (L_{g2}), and the first branch inductor (L_{b}), respectively and arranged in a linear layout and two elongation-shaped shared limbs disposed parallel with the linear layout and symmetrically positioned at two long sides of the core limbs, respectively.

6. The rectifier according to any one of claims 1 to 3, further comprising core limbs for the first inductor (L_{g1}), the second inductor (L_{g2}), and the first branch inductor (L_{b}), respectively and arranged in a linear layout and two shared limbs distributed parallel with the linear layout and symmetrically positioned at two short sides of the core limbs.

7. The rectifier according to claim 6, further comprising two further shared limbs disposed between two adjacent core limbs, respectively.

8. The rectifier according to any one of claims 1 to 3, further comprising core limbs for the first inductor (L_{g1}), the second inductor (L_{g2}), and the first branch inductor (L_{b}), respectively and arranged in a linear layout and two shared limbs positioned between two adjacent core limbs, respectively.

9. The rectifier according to any one of claims 1 to 3, further comprising core limbs for the first inductor (L_{g1}), the second inductor (L_{g2}), and the first branch inductor (L_{b}), respectively and arranged in a linear layout, wherein the core limb for the first branch inductor (L_{b}) is disposed between the core limbs for the first inductor (L_{g1}) and the second inductor (L_{g2}), or the rectifier further comprising core limbs for the first inductor (Lgl), the second inductor (Lg2), and the first branch inductor (Lb), respectively and arranged in a symmetric triangular layout or a linear layout, wherein the core limbs are disposed side by side, and axes of the core limbs are disposed parallel to each other.

10. The rectifier according to any one of the above claims, further comprising core limbs for the first inductor (Lg1), the second inductor (Lg2), and the first branch inductor (Lb), respectively and arranged in a symmetric triangular layout or a linear layout, wherein windings of the first inductor and the first branch inductor have a same winding direction and have an inversed winding direction with winding of the second inductor.

11. The rectifier according to any one of the above claims, wherein the first HF bridge leg (B1) and the second HF bridge leg (B2) are 180° in phase, the first HF bridge leg (B1) comprises a first switch (S₁) and a second switch (S₂) connected in serial and operated in complementary manner, and the second HF bridge leg (B2) comprises a third switch (S₃) and a fourth switch (S₄) connected in serial and operated in complementary manner, and wherein the LF bridge leg (B3) comprises two switches (M₁/M₂) connected in serial and operated in complementary manner.

12. The rectifier according to any one of the above claims, wherein gate signals distortions and propagation delay mismatches between the first HF bridge leg and the second HF bridge leg are less than 0.1%.

13. The rectifier according to any one of the above claims, further comprising:
a current sensor connected to the first branch inductor (L_{b}) in series;
a low-pass filter connected to an output of the current sensor; and
a control circuit connected to the low-pass filter to output control signal to the first HF bridge leg and the second HF bridge leg.

14. The rectifier according to any one of the above claim 15, wherein the control circuit comprises: a compensator and a power factor correction (PFC) modulator, and output of the compensator is at least one of being summed with output of the PFC modulator to adjust the control signal to the second HF bridge leg and subtracted from output of the PFC modulator to adjust the control signal to the first HF bridge leg.

15. The rectifier according to any one of the above claims, wherein a variable switching frequency f_{sw}(t) over a line cycle is expressed as: ${f}_{sw} \left(t\right) = \left\{\begin{matrix}\frac{1}{2 \left[\frac{1}{2}{i}_{gpk}\left|sin\left(wt\right)\right|+{I}_{zvs}\right]} \left(\frac{\left(1-d\left(t\right)\right) {V}_{o}}{{L}_{b}}+\frac{d \left(t\right) ⋅ {u}_{gpk} \left|sin\left(wt\right)\right|}{{L}_{g}}\right) , d \left(t\right) > \frac{1}{2} \\ \frac{1}{2 \left[\frac{1}{2}{i}_{gpk}\left|sin\left(wt\right)\right|+{I}_{zvs}\right]} \left(\frac{d \left(t\right) {V}_{o}}{{L}_{b}}+\frac{d \left(t\right) ⋅ {u}_{gpk} \left|sin\left(wt\right)\right|}{{L}_{g}}\right) , d \left(t\right) < \frac{1}{2}\end{matrix}\right.$ wherein L_{g} is inductance of the first inductor or the second inductor, L_{b} is inductance of the first branch inductor, u_{gpk} is a peak ac grid voltage, i_{gpk} is a peak grid current, Vₒ is an output voltage of the PFC rectifier, I_{zvs} is a predefined current level used to achieve or approach zero-voltage switching (ZVS) for main switches, and d(t) is duty cycle determined by $d \left(t\right) = 1 - \frac{{u}_{gpk} \left|sin\left(wt\right)\right|}{{V}_{o}}$, and wherein the inductance L_{g} and L_{b} are expressed as: ${L}_{g} = \frac{{u}_{gpk}^{2}}{{r}_{Lg} {f}_{sw min} P} \left(1-\frac{{u}_{gpk}}{{V}_{o}}\right)$ and ${L}_{b} = \frac{{V}_{o}}{2 {f}_{sw min} \left(\frac{1}{2}{i}_{gpk}+{I}_{zvs}-\frac{{r}_{Lg} P}{2 {u}_{gpk}}\right)} \left(1-\frac{{u}_{gpk}}{{V}_{o}}\right)$ wherein r_{Lg} is a ripple ratio of inductance current of the first inductor or the second inductor, f_{sw min} is a minimum switching frequency corresponding to a peak position of a grid voltage, and P denotes a total power rating of the converter.
